# EUROPÄISCHE PATENTSCHRIFT

(11) **EP 3 892 082 B1**
(45) Veröffentlichungstag und Bekanntmachung des Hinweises auf die Patenterteilung: **25.12.2024**
(21) Anmeldenummer: 20169021.1
(22) Anmeldetag: 09.04.2020
(51) Int. Cl.: A01D 34/90, B25F 5/02, B25G 1/10

(54) **HANDGRIFF FÜR EIN HANDGEFÜHRTES ARBEITSGERÄT UND FREISCHNEIDER**
HANDLE FOR A HAND-OPERATED TOOL AND FREE CUTTER
POIGNÉE POUR UN APPAREIL DE TRAVAIL GUIDÉ À LA MAIN ET DÉBROUSSAILLEUSE

(43) Veröffentlichungstag der Anmeldung: 13.10.2021
(73) Patentinhaber: Andreas Stihl AG & Co. KG, 71336 Waiblingen (DE)
(72) Erfinder: BICHELER, Liv, 71394 Kernen i. R. (DE); MANDEL, Roland, 70329 Stuttgart (DE); HAUG, Simon, 71336 Waiblingen (DE)
(74) Vertreter: Reinhardt, Annette

(56) Entgegenhaltungen:
- EP-A1- 2 845 460
- WO-A1-98/29167
- FR-A1- 2 891 178
- US-A1- 2003 226 262
- US-A1- 2014 075 693

## Beschreibung

Die Erfindung betrifft einen Handgriff für ein handgeführtes Arbeitsgerät der im Oberbegriff des Anspruchs 1 angegebenen Gattung sowie einen Freischneider der im Oberbegriff des Anspruchs 19 angegebenen Gattung.

Aus der EP 2 845 460 A1 geht ein Freischneider hervor, an dessen Führungsrohr ein Lenkergriff fixiert ist, der zwei Handgriffe trägt. An der Innenseite des Handgriffs, der die Bedienelemente trägt, ist eines der Bedienelemente angeordnet.

Im Betrieb müssen über den oder die Handgriffe die Führungskräfte zum Führen des Werkzeugs eingeleitet werden. Dabei können Kräfte in unterschiedliche Richtungen einzuleiten sein. Zum Mähen mit einem Freischneider muss das Werkzeug hin- und hergehend bewegt werden. Es kann jedoch auch notwendig sein, das Werkzeug in ein Werkstück zu schieben oder zu drücken.

Der Erfindung liegt die Aufgabe zugrunde, einen Handgriff für ein handgeführtes Arbeitsgerät zu schaffen, mit dem die Einleitung von Führungskräften ergonomisch und kraftsparend möglich ist. Eine weitere Aufgabe der Erfindung liegt darin, einen Freischneider anzugeben, der ein ergonomisches und kraftsparendes Arbeiten ermöglicht.

Diese Aufgabe wird bezüglich des Handgriffs für ein handgeführtes Arbeitsgerät durch einen Handgriff mit den Merkmalen des Anspruchs 1 gelöst. Bezüglich des Freischneiders wird die Aufgabe durch einen Freischneider mit den Merkmalen des Anspruchs 19 gelöst.

Es ist vorgesehen, dass an der Innenseite des Handgriffs eine Daumenauflagefläche angeordnet ist, die in einer Seitenansicht senkrecht auf die Innenseite mit der Längsachse des Handgriffs an jeder Stelle einen Winkel von mindestens 20° und höchstens 70° einschließt. Aufgrund dieser Neigung der Daumenauflagefläche ergibt sich zum einen eine ergonomische Handhaltung am Daumen. Zum anderen können über die Daumenauflagefläche insbesondere beim Schieben und Drücken eines Werkzeugs, beispielsweise eines Messers eines Freischneiders, sehr gut Kräfte in das Werkzeug eingeleitet werden. Die beim Schieben und Drücken eines Werkzeugs vom Bediener einzuleitenden Kräfte müssen nicht nur von der Handinnenfläche aufgebracht werden, sondern können auch vom Daumen aufgebracht werden. Dabei ist insbesondere auch die Einbringung von Kraftanteilen in Richtung auf das Befestigungsende des Handgriffs kraftsparend und ergonomisch möglich.

Die Daumenauflagefläche ist vorteilhaft als Oberseite einer an der Innenseite des Schafts angeordneten Erhöhung ausgebildet. Die Daumenauflagefläche steht vorteilhaft gegenüber einem etwa geraden Verlauf der Innenseite seitlich hervor. Alternativ kann die Daumenauflagefläche als Boden einer an der Innenseite eingebrachten Vertiefung ausgebildet sein. Auch eine Kombination aus Erhöhung und Vertiefung kann vorgesehen sein.

Die Daumenauflagefläche ist vorzugsweise eine vergleichsweise ebene Fläche. Die Daumenauflagefläche liegt zwischen zwei parallel zueinander verlaufenden Ebenen. Der Abstand der beiden Ebenen beträgt vorteilhaft weniger als 3 mm, insbesondere weniger als 2 mm. Die Daumenauflagefläche weist eine Länge von mindestens 2,5 cm und eine Breite von mindestens 8 mm auf. Die Länge und die Breite der Daumenauflagefläche geben dabei die maximale Länge und die maximale Breite an. In den außerhalb der beiden parallel zueinander verlaufenden Ebenen liegenden Bereichen geht die Daumenauflagefläche vorteilhaft mit angepasster Krümmung in die Innenseite und die Vorder- und/oder Rückseite des Handgriffs über. Die Daumenauflagefläche kann eine ebene Fläche sein. Es kann jedoch auch vorgesehen sein, dass die Daumenauflagefläche geringfügig gekrümmt verläuft. Der Krümmungsradius der Daumenauflagefläche ist dabei in alle Richtungen bevorzugt möglichst groß. Die Krümmung der Daumenauflagefläche weist vorteilhaft einen minimalen Radius auf, der mindestens 10 mm, insbesondere mindestens 15 mm, vorteilhaft mindestens 30 mm beträgt. Die Daumenauflagefläche kann in unterschiedlichen Richtungen unterschiedlich gekrümmt verlaufen.

Die Daumenauflagefläche ist vorteilhaft in einem Abstand zum freien Ende des Schafts angeordnet. Die Daumenauflagefläche erstreckt sich demnach in einer Ausführungsvariante nicht bis zum freien Ende des Schafts. Der Abstand der Daumenauflagefläche zum freien Ende des Schafts beträgt vorteilhaft mindestens 1 cm. Dieser Abstand ist insbesondere für einen Handgriff vorgesehen, der keine Bedienelemente trägt. Bevorzugt ist der Abstand der Daumenauflagefläche zum freien Ende des Schafts von mindestens 1 cm für einen linken Handgriff vorgesehen. Für einen Handgriff, der mindestens ein Bedienelement trägt, kann ein geringerer Abstand der Daumenauflagefläche zum freien Ende vorteilhaft sein.

Vorteilhaft geht die Daumenauflagefläche mit einer konkaven Wölbung in die Innenseite des Handgriffs über. In einer Schnittebene, die parallel zur Längsachse des Handgriffs und durch die Innenseite verläuft, schließt die Daumenauflagefläche mit der Längsachse vorteilhaft einen Winkel ein, der zum Befestigungsende öffnet. Die Daumenauflagefläche fällt vorteilhaft in Richtung auf die andere Hand des Benutzers hin ab. Zur Längsachse hin steigt die Daumenauflagefläche vorteilhaft an. Dadurch kann ein Bediener den Daumen gut in seitlicher Richtung auf die Daumenauflagefläche auflegen. Ein Aufschieben in Längsrichtung der Daumenauflagefläche ist nicht erforderlich. Auch ein geringes Ansteigen der Daumenauflagefläche zur anderen Hand hin bzw. ein geringes Abfallen zur Längsachse hin kann jedoch vorteilhaft sein. Der Winkel beträgt vorteilhaft 30° bis 110°, insbesondere 60° bis 90°. Bevorzugt ist der Winkel kleiner als 90°. Der Winkel, den die Daumenauflagefläche mit der Längsachse einschließt, kann dabei über die Länge der Daumenauflagefläche variieren.

Vorteilhaft weist der Handgriff an seinem Befestigungsende eine Aufnahme zum Aufstecken des Handgriffs, beispielsweise auf einen Lenkerholm, auf. Die Längsachse des Handgriffs ist vorteilhaft die Längsmittelachse der hohlen Aufnahme. Die Längsachse erstreckt sich in Aufsteckrichtung des Handgriffs. Es kann auch vorgesehen sein, dass der Handgriff am Befestigungsende und am freien Ende jeweils verdickt ausgeführt ist und sich dazwischen ein Griffabschnitt erstreckt, den der Bediener mit seinen Fingern im Betrieb umschließen kann. Die Längsachse verläuft vorteilhaft durch die Flächenschwerpunkte des Griffabschnitts in Schnittebenen benachbart zu den verdickten Enden.

Es hat sich gezeigt, dass die Arbeit mit dem handgeführten Arbeitsgerät für einen Bediener weniger ermüdend ist, wenn die Handposition im Laufe des Arbeitens mehrfach geändert werden kann. Um nicht nur ein Umfassen des Schafts zu ermöglichen, sondern auch eine Auflage der Hand, ist vorgesehen, dass der Schaft mit seinem freien Ende eine Auflagefläche für eine Hand eines Benutzers bildet. Besonders bevorzugt geht die Auflagefläche über eine kontinuierliche Rundung in eine in Umfangsrichtung des Schafts zwischen der Innenseite und der Außenseite verlaufende Rückseite über. Aufgrund der kontinuierlichen Rundung kann die Hand des Bedieners kontinuierlich zwischen unterschiedlichen Greifpositionen wechseln, wobei die Hand des Bedieners an der Rundung entlang von der Rückseite zur Auflagefläche und zurück bewegt werden kann. Die Rundung ist dabei vorteilhaft mit vergleichsweise großem Radius ausgebildet, um ein störungsfreies Abgleiten der Hand des Benutzers zu ermöglichen. In einer Seitenansicht auf die Außenseite des Griffs weist die Rundung vorteilhaft an jeder Stelle einen Radius von mindestens 1,5 cm, insbesondere von mindestens 2 cm auf.

Der Handgriff kann ein Handgriff sein, der Bedienelemente trägt. Vorteilhaft ist an dem Schaft ein erstes Bedienelement um eine erste Schwenkachse schwenkbar gelagert und ein zweites Bedienelement um eine zweite Schwenkachse. Das erste Bedienelement ist vorteilhaft zur Ansteuerung des Antriebsmotors ausgebildet, und das zweite Bedienelement verhindert in unbetätigter Position die Ansteuerung des Antriebsmotors über das erste Bedienelement. In vorteilhafter Gestaltung kann vorgesehen sein, dass das zweite Bedienelement in seiner unbetätigten Position das erste Bedienelement mechanisch sperrt. Es kann jedoch auch vorgesehen sein, dass das zweite Bedienelement zwar ein Verschwenken des ersten Bedienelements zulässt, dieses Verschwenken in unbetätigter Position des zweiten Bedienelements jedoch nicht zu einer Ansteuerung des Antriebsmotors führt, beispielsweise durch entsprechende Beschaltung von Schaltern, die von den Bedienelementen betätigt werden, oder durch entsprechende mechanische Kopplung.

Als Längsachse des Handgriffs wird vorliegend vorteilhaft eine Achse angesehen, die senkrecht zur ersten Schwenkachse und senkrecht zur zweiten Schwenkachse liegt. Bei Blickrichtung in Richtung der Längsachse schließen die erste Schwenkachse und die zweite Schwenkachse vorteilhaft einen Winkel von weniger als 180°, insbesondere von weniger als 120° ein. Besonders bevorzugt schließen die erste und die zweite Schwenkachse bei Blickrichtung in Richtung der Längsachse des Handgriffs einen Winkel von etwa 90° ein. Die beiden Schwenkachsen liegen demnach nicht parallel zueinander, wie dies für Bedienelemente, die an gegenüberliegenden Seiten eines Handgriffs angeordnet sind, üblich ist. In besonders bevorzugter Gestaltung ist das erste Bedienelement an der Vorderseite des Handgriffs angeordnet und das zweite Bedienelement an der Außenseite des Handgriffs. Dadurch kann das zweite Bedienelement mit dem Handteller vom Benutzer betätigt werden.

Das zweite Bedienelement weist vorteilhaft einen in unbetätigter Stellung aus dem Schaft ragenden Betätigungsabschnitt auf, der ein erstes, dem Befestigungsende näher liegendes Ende und ein zweites, dem freien Ende des Schafts näher liegendes Ende aufweist. Die zweite Schwenkachse ist vorteilhaft näher an dem ersten Ende des Betätigungsabschnitts angeordnet als an dem zweiten Ende des Betätigungsabschnitts. Bevorzugt liegt die Schwenkachse näher am Befestigungsende als am freien Ende des Schafts. Dadurch führt das Bedienelement seine größte Bewegung an dem dem freien Ende des Schafts näher liegenden Ende aus. Dadurch ist eine sichere Betätigung des zweiten Bedienelements auch dann möglich, wenn der Bediener aufgrund seiner gewählten Handhaltung, beispielsweise einer Auflage der Hand auf der Auflagefläche, den Betätigungsabschnitt nur an seinem zweiten Ende erreichen und betätigen kann. Durch die vorgesehene Lagerung des zweiten Bedienelements wird das Bedienen des Arbeitsgeräts in den unterschiedlichen Handhaltungen daher vereinfacht. Der Betätigungsabschnitt des zweiten Bedienelements steht in betätigter Stellung des zweiten Bedienelements vorteilhaft an keiner Stelle um mehr als 3 mm über die Außenkontur des Schafts hervor. Dadurch kann das zweite Bedienelement bequem mit der Handinnenfläche gedrückt werden. Beim Verändern der Handposition am Handgriff bewirkt der Betätigungsabschnitt keine oder lediglich eine geringfügige Störung der Bewegung der Hand des Bedieners.

Vorteilhaft weist das erste Bedienelement in unbetätigter Stellung einen aus dem Schaft ragenden Betätigungsabschnitt auf. Der Betätigungsabschnitt des ersten Bedienelements weist vorteilhaft ein erstes, dem Befestigungsende näher liegendes Ende und ein zweites, dem freien Ende des Schafts näher liegendes Ende auf. Die erste Schwenkachse ist in vorteilhafter Gestaltung näher an dem zweiten Ende des Betätigungsabschnitts des ersten Bedienelements angeordnet als an dem ersten Ende des Betätigungsabschnitts des ersten Bedienelements.

Vorteilhaft weist der Betätigungsabschnitt mindestens eines Bedienelements zum freien Ende des Schafts einen Abstand von weniger als 7 cm auf. Dadurch kann das entsprechende Bedienelement vom Bediener gegriffen werden, wenn die Hand des Bedieners an einem Auflageabschnitt am freien Ende des Schafts aufliegt. Besonders bevorzugt weisen die Betätigungsabschnitte beider Bedienelemente zum freien Ende des Schafts einen Abstand von weniger als 7 cm auf. Dadurch können beide Bedienelemente vom Bediener betätigt werden, wenn die Hand des Bedieners am Auflageabschnitt am freien Ende des Schafts aufliegt. Damit beide Bedienelemente vom Bediener in unterschiedlichen Handpositionen gegriffen werden können, ist vorteilhaft vorgesehen, dass der Betätigungsabschnitt des ersten Bedienelements und der Betätigungsabschnitt des zweiten Bedienelements sich über einen Längenabschnitt des Schafts überlappen. Die in Richtung der Längsachse gemessene Länge des Längenabschnitts des Schafts beträgt vorteilhaft mindestens 30%, insbesondere mindestens 50% der in gleicher Richtung gemessenen Länge des Betätigungsabschnitts des ersten Bedienelements. Besonders vorteilhaft überlappen sich die Betätigungsabschnitte der beiden Bedienelemente mindestens teilweise in einem Griffabschnitt des Schafts. Der Griffabschnitt des Schafts ist dabei vorteilhaft ein Abschnitt, der zwischen zwei verdickten Endbereichen des Schafts liegt.

Das erste Bedienelement ist vorteilhaft an einer in Umfangsrichtung des Schafts zwischen der Innenseite und der Außenseite verlaufenden, zur Anlage an den Fingern eines Benutzers vorgesehenen Vorderseite angeordnet. Das zweite Bedienelement ist bevorzugt an der Außenseite angeordnet.

In vorteilhafter Gestaltung ist vorgesehen, dass der Handgriff ein drittes Bedienelement aufweist. Das dritte Bedienelement ist bevorzugt an der Innenseite des Handgriffs angeordnet. Das dritte Bedienelement ist insbesondere zur Betätigung mit einem Daumen eines Bedieners vorgesehen. Das erste Bedienelement ist vorteilhaft überwiegend zur Betätigung mit dem Zeige- und/oder Mittelfinger eines Bedieners vorgesehen. Das dritte Bedienelement weist eine Betätigungsposition auf, in der das dritte Bedienelement bei einer Bewegung von einer unbetätigten Stellung zu einer betätigten Stellung beginnt, einen Betätigungshub auszuführen. Es kann vorgesehen sein, dass zwischen der unbetätigten Stellung und der Betätigungsposition ein Leerhub für das dritte Bedienelement vorgesehen ist. Es kann jedoch auch vorgesehen sein, dass die Betätigungsposition mit der unbetätigten Stellung des Bedienelements übereinstimmt.

In Betätigungsposition steht das dritte Bedienelement bei Blickrichtung in Richtung der Längsachse auf das Befestigungsende des Schafts vorteilhaft über höchstens 1 mm über die Außenkontur des Handgriffs vor. Das dritte Bedienelement liegt bei Blickrichtung senkrecht auf die Daumenauflagefläche insbesondere hinter der Außenkontur des Handgriffs, ist also vom Schaft verdeckt. Dadurch ist ein unbeabsichtigtes Betätigen des dritten Bedienelements bei auf der Auflagefläche liegender Hand des Bedieners vermieden. In unbetätigter Stellung steht das dritte Bedienelement vorteilhaft an mindestens einer Seite, insbesondere an seiner dem Befestigungsende zugewandten Seite über die Kontur des Schafts vor.

Die an der Innenseite mindestens eines der Handgriffe angeordnete Daumenauflagefläche, die in einer Seitenansicht senkrecht auf die Innenseite mit der Längsachse an jeder Stelle einen Winkel von mindestens 20° und höchstens 70° einschließt, ist besonders vorteilhaft für einen Freischneider mit einem Führungsrohr vorgesehen, wobei an einem Ende des Führungsrohrs eine Werkzeugeinheit angeordnet ist und wobei an dem Führungsrohr ein Lenkerholm festgelegt ist, der an jedem Ende einen Handgriff trägt.

Durch die Daumenauflagefläche an mindestens einem der Handgriffe können Bewegungen zum Schieben und Drücken des Werkzeugs gut ergänzend über die Daumenauflagefläche in die Handgriffe und von dort in die Werkzeugeinheit eingeleitet werden.

In besonders bevorzugter Gestaltung weisen beide Handgriffe des Freischneiders an ihrer Innenseite eine Daumenauflagefläche auf.

Ausführungsbeispiele der Erfindung werden im Folgenden anhand der Zeichnung erläutert. Es zeigen:
- Fig. 1: eine schematische, perspektivische Darstellung eines Bedieners mit einem Freischneider,
- Fig. 2: eine perspektivische Darstellung eines ersten Handgriffs des Freischneiders aus Fig. 1,
- Fig. 3: eine Seitenansicht auf die Außenseite des Handgriffs aus Fig. 2,
- Fig. 4: einen Schnitt durch den Handgriff in Richtung der Linie IV-IV in Fig. 3,
- Fig. 5: eine Seitenansicht in Richtung des Pfeils V in Fig. 3 auf die Rückseite des Handgriffs,
- Fig. 6: eine Seitenansicht in Richtung des Pfeils VI in Fig. 5 auf die Innenseite des Handgriffs,
- Fig. 7: eine ausschnittsweise Schnittdarstellung entlang der Linie VII-VII in Fig. 6,
- Fig. 8: eine ausschnittsweise Schnittdarstellung entlang der Linie VIII-VIII in Fig. 6,
- Fig. 9: eine Seitenansicht in Richtung des Pfeils IX-IX in Fig. 3 auf die Vorderseite des Handgriffs,
- Fig. 10: eine perspektivische, schematische Darstellung der Daumenauflagefläche des Handgriffs,
- Fig. 11: eine schematische Darstellung des Betätigungswegs des dritten Bedienelements des Handgriffs,
- Fig. 12: eine perspektivische Darstellung des dritten Bedienelements in unbetätigter Stellung,
- Fig. 13: eine perspektivische Darstellung des dritten Bedienelements in betätigter Stellung,
- Fig. 14 bis 18: schematische Darstellungen möglicher unterschiedlicher Handhaltungen am ersten Handgriff,
- Fig. 19: eine Seitenansicht eines zweiten Handgriffs,
- Fig. 20: einen Schnitt durch eine Ballenauflage des zweiten Handgriffs entlang der Linie XX-XX in Fig. 19,
- Fig. 21 und 22: perspektivische Darstellungen des zweiten Handgriffs,
- Fig. 23: eine Seitenansicht auf die Rückseite des zweiten Handgriffs in Richtung des Pfeils XXIII in Fig. 19,
- Fig. 24: eine Seitenansicht in Richtung des Pfeils XXIV in Fig. 23 auf die Außenseite des Handgriffs,
- Fig. 25: eine ausschnittsweise Schnittdarstellung durch die Daumenauflagefläche entlang der Linie XXV-XXV in Fig. 19,
- Fig. 26: eine Seitenansicht eines Lenkergriffs eines Freischneiders mit zwei Handgriffen,
- Fig. 27: einen Schnitt entlang der Linie XXVII-XXVII in Fig. 26 durch den zweiten, linken Handgriff,
- Fig. 28: einen Schnitt entlang der Linie XXVIII-XXVIII in Fig. 26 durch den ersten, rechten Handgriff.

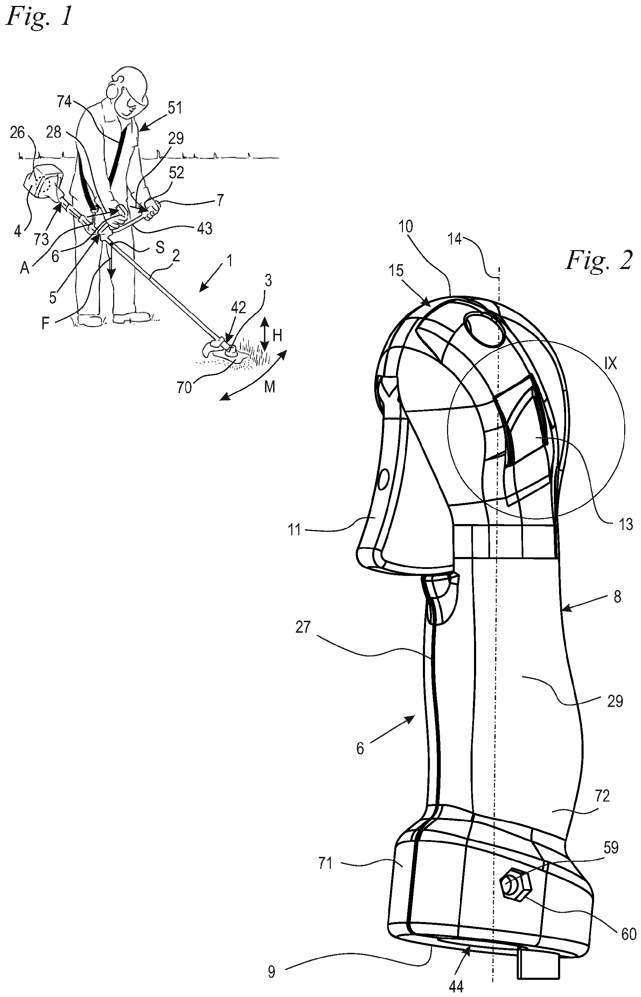

Fig. 1 zeigt schematisch einen Benutzer 51, der ein handgeführtes Arbeitsgerät, nämlich einen Freischneider 1 trägt. Der Freischneider 1 weist ein Führungsrohr 2 auf. An einem Ende 42 des Führungsrohrs 2 ist eine Werkzeugeinheit 3, im Ausführungsbeispiel ein Werkzeugkopf mit einem Schneidmesser 70, angeordnet. Am anderen Ende 73 des Führungsrohrs ist ein Gehäuse 4 angeordnet. Im Ausführungsbeispiel ist im Gehäuse 4 ein schematisch dargestellter Antriebsmotor 26 angeordnet. Der Antriebsmotor 26 kann beispielsweise ein Elektromotor, insbesondere ein von einem Akku mit Energie versorgter Elektromotor, oder ein Verbrennungsmotor sein.

Der Bediener 51 trägt den Freischneider 1 mit einem Traggurt 74. Über den Traggurt 74 wird das Gewicht des Freischneiders 1 im Betrieb zumindest teilweise, insbesondere weitgehend aufgenommen. Der Traggurt 74 hält den Freischneider 1 an einem Aufhängepunkt A. Der Freischneider 1 ist an dem Traggurt 74 vorteilhaft so aufgehängt, dass der Freischneider 1 an dem Traggurt 74 in einer Arbeitslage, also einer Lage, in der die Werkzeugeinheit 3 weiter unten angeordnet ist als das Gehäuse 4, frei hängt. In Fig. 1 sind schematisch der Schwerpunkt S des Freischneiders 1 und die Gewichtskraft F eingezeichnet. Der Schwerpunkt S des Freischneiders 1 ist gegenüber dem Aufhängepunkt A vorteilhaft in Richtung auf die Werkzeugeinheit 3 verschoben. Dadurch hängt der Freischneider 1 an dem Traggurt 74 so, dass die Werkzeugeinheit 3 weiter unten angeordnet ist als das Gehäuse 4 des Freischneiders 1.

Zum Führen des Freischneiders 1 ist am Führungsrohr 2 ein Lenkergriff 5 fixiert. Über den Lenkergriff 5 werden im Betrieb insbesondere die Kräfte zum Vorschub des Werkzeugs eingeleitet. Die Vorschubbewegung kann beispielsweise eine hin- und hergehende Bewegung beim Mähen oder eine auf- und abgehende, schlagende Bewegung beim Häckselbetrieb sein. Die Bewegungsrichtung beim Mähen ist in Fig. 1 schematisch mit dem Doppelpfeil M eingezeichnet und die Bewegungsrichtung beim Häckselbetrieb mit dem Doppelpfeil H.

Der Lenkergriff 5 ist ein sogenannter Bikelenker. Der Lenkergriff 5 umfasst einen Lenkerholm 43. Der Lenkerholm 43 erstreckt sich vorzugsweise etwa quer zum Führungsrohr 2. An den beiden Enden des Lenkerholms 43 ist jeweils ein Handgriff 6 bzw. 7 angeordnet. Die Handgriffe 6 und 7 weisen Innenseiten 29 auf, die einander zugewandt angeordnet sind. Die Handgriffe 6 und 7 weisen einander abgewandt liegende Außenseiten 28 auf. Die Außenseiten 28 der Handgriffe 6 und 7 liegen am Handteller 52 des Benutzers 51 an. Die Innenseiten 29 sind damit die einander nahe liegenden Seiten der Handgriffe 6 und 7 und die Außenseiten 28 sind die einander entfernt liegenden Seiten der Handgriffe 6 und 7.

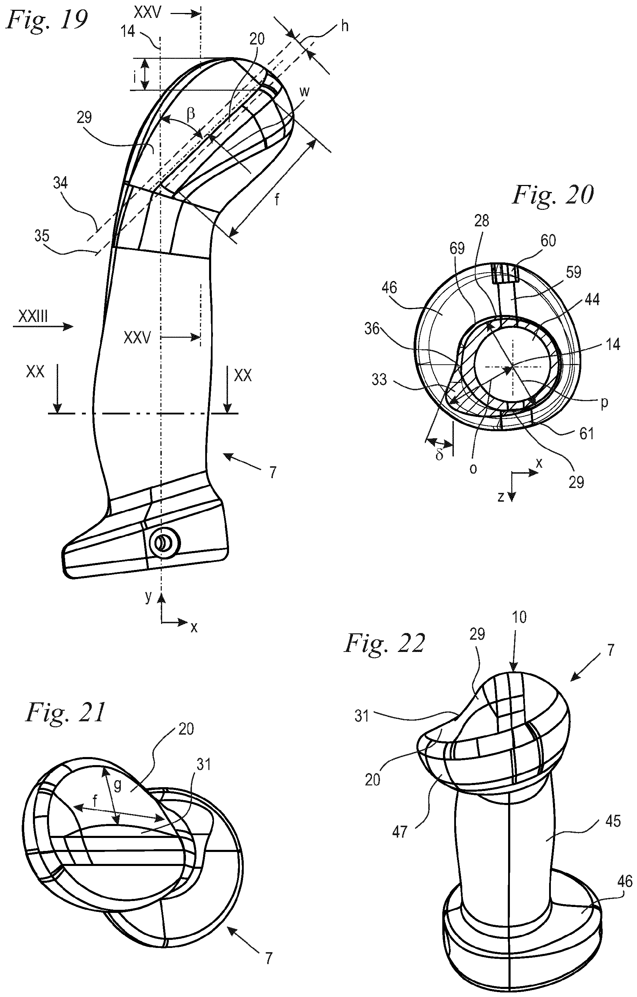

Die Fig. 2 bis 18 zeigen den ersten Handgriff 6, im Ausführungsbeispiel den rechten Handgriff. Die Fig. 19 bis 25 zeigen den zweiten Handgriff 7, der im Ausführungsbeispiel den linken Handgriff des Freischneiders 1 bildet. Die Handgriffe 6 und 7 können auch bei anderen handgeführten Arbeitsgeräten, insbesondere bei Blasgeräten, Sprühgeräten oder dgl. zum Einsatz kommen.

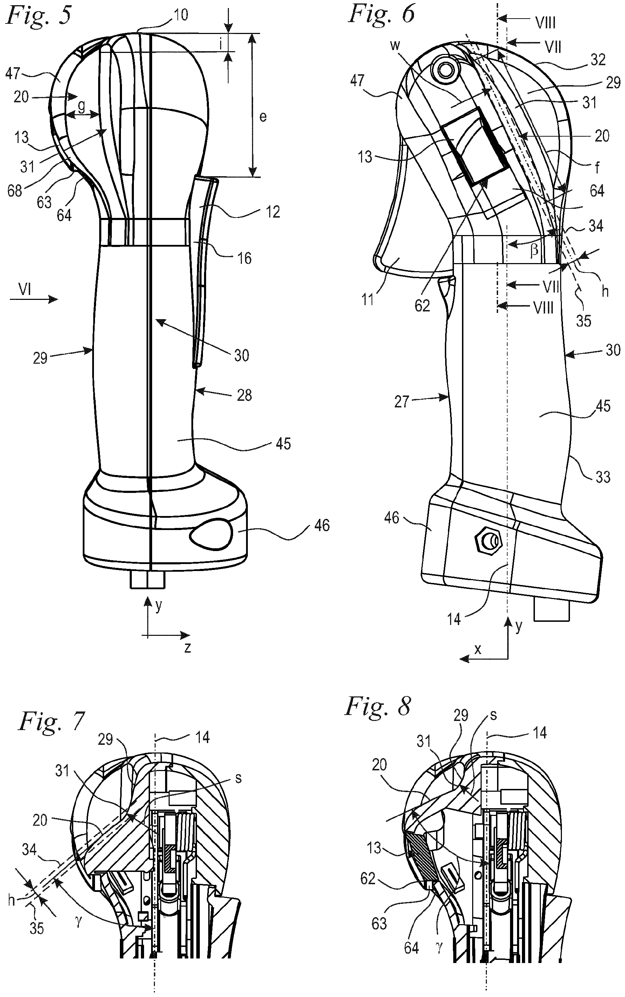

Wie Fig. 2 zeigt, weist der erste Handgriff 6 einen Schaft 8 auf. Der Schaft 8 weist ein Befestigungsende 9 sowie ein freies Ende 10 auf. In üblicher Arbeitshaltung an einem Freischneider 2 weist das freie Ende 10 nach vorn und oben. Am Befestigungsende 9 ist im Ausführungsbeispiel eine Aufnahme 44 ausgebildet, in die der Lenkerholm 43 eingesteckt ist. Die Mittelachse der Aufnahme 44 fällt vorteilhaft mit einer Längsachse 14 des Handgriffs 6 zusammen. Der Schaft 8 des Handgriffs 6 ist im Ausführungsbeispiel aus zwei Halbschalen 71 und 72 aufgebaut, die in einer Trennebene parallel zur Längsachse 40 aneinander anliegen. Der erste Handgriff 6 weist eine Vorderseite 27 auf, die sich zwischen der Außenseite 28 und der Innenseite 29 erstreckt. Die Vorderseite 27 ist zur Anlage an den Fingern einer Hand des Benutzers 51 vorgesehen. Außerdem weist der Handgriff 2 eine Rückseite 30 auf, die in Fig. 5 dargestellt ist und die gegenüberliegend zur Vorderseite 27 angeordnet ist. In üblicher Arbeitshaltung liegt die Rückseite 30 bei einem Freischneider dem Bediener zugewandt, und die Vorderseite 27 weist in Richtung zur Werkzeugeinheit 3.

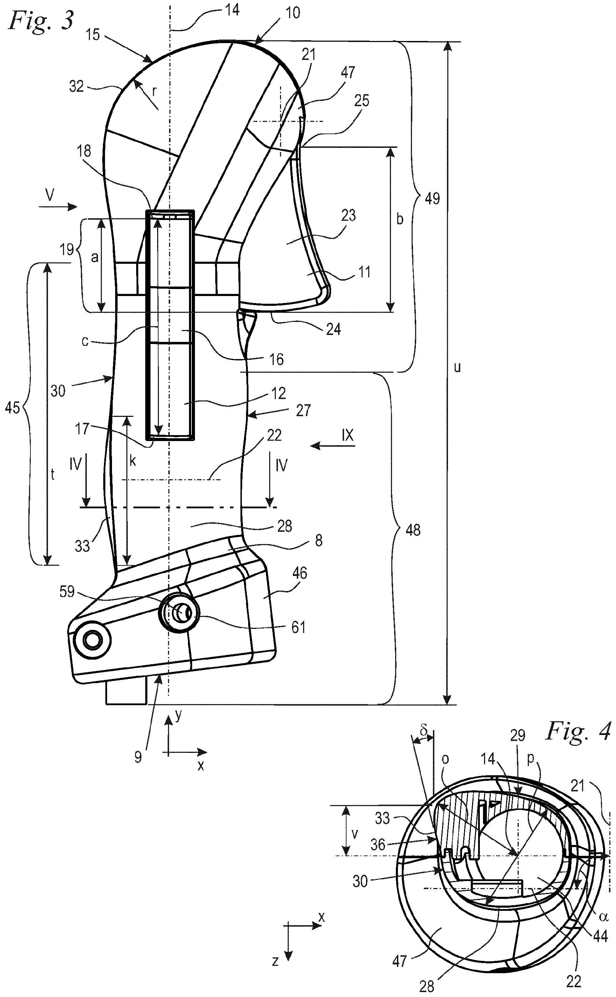

Zur Fixierung des Handgriffs 6 am Lenkerholm 43 ist vorteilhaft eine nicht dargestellte Befestigungsschraube vorgesehen, die durch eine Befestigungsöffnung 59 im Handgriff 6 ragt. Die Befestigungsschraube durchragt vorteilhaft auch Öffnungen im Lenkerholm 43 und legt dadurch die Lage des Handgriffs 6 gegenüber dem Lenkerholm 43 fest. In Fig. 2 ist eine Aufnahme 60 für eine Befestigungsmutter dargestellt. Wie Fig. 3 zeigt, weist die gegenüberliegende Außenseite 28 eine Aufnahme 61 für eine Befestigungsschraube auf, die in die Befestigungsmutter auf der gegenüberliegenden Seite des Handgriffs 6 einzuschrauben ist.

Wie Fig. 2 auch zeigt, ist am freien Ende 10 des Handgriffs 6 eine Auflagefläche 15 für eine Hand des Benutzers 51 ausgebildet. Die Auflagefläche 15 ist gerundet ausgebildet und in ihrer Größe an die Handinnenfläche eines Benutzers angepasst. Wie Fig. 2 auch zeigt, weist der erste Handgriff 6 ein erstes Bedienelement 11 sowie ein drittes Bedienelement 13 auf.

Ein zweites Bedienelement 12, das ebenfalls am ersten Handgriff 6 angeordnet ist, ist in Fig. 3 dargestellt. Der Schaft 8 bildet einen länglichen Grundkörper des ersten Handgriffs 6, an dem die Bedienelemente 11, 12 und 13 gelagert sind. Das erste Bedienelement 11 ist vorteilhaft zur Ansteuerung des Antriebsmotors 26 ausgebildet. Mit dem ersten Bedienelement 11 lässt sich insbesondere die Drehzahl des Antriebsmotors 26 und damit die Drehzahl des Werkzeugs einstellen. Das zweite Bedienelement 12 kann vorteilhaft in unbetätigter Stellung die Ansteuerung des Antriebsmotors 26 über das erste Bedienelement verhindern, beispielsweise durch Sperrung des ersten Bedienelements 11. Das dritte Bedienelement kann beispielsweise ein Stoppschalter sein. Auch eine andere Funktion der Bedienelemente 11, 12 und 13 kann jedoch vorteilhaft sein.

Das erste Bedienelement 11 ragt, wie Fig. 3 zeigt, an der Vorderseite 27 mit einem Betätigungsabschnitt 23 aus dem Schaft 8. Der Betätigungsabschnitt 23 ist der gesamte Abschnitt des ersten Bedienelements 11, der in unbetätigter Stellung des ersten Bedienelements 11 aus dem Schaft 8 ragt. Das erste Bedienelement 11 ist um eine erste Schwenkachse 21 schwenkbar gelagert. Die erste Schwenkachse 21 liegt näher am freien Ende 10 des Handgriffs 6 als der Betätigungsabschnitt 23. Der Betätigungsabschnitt 23 des ersten Betätigungselements 11 weist ein erstes Ende 24 und ein zweites Ende 25 auf. Das erste Ende 24 liegt näher am Befestigungsende 9 als das zweite Ende 25. Die Schwenkachse 21 liegt näher am zweiten Ende 25 des Betätigungsabschnitts 23 als am ersten Ende 24. Die Schwenkachse 21 liegt in Richtung der Längsachse 14 näher am freien Ende 10 als das zweite Ende 25 des Betätigungsabschnitts 23. Der Betätigungsabschnitt 23 des ersten Betätigungselements 11 weist eine in Richtung der Längsachse 14 gemessene Länge b auf.

Das zweite Bedienelement 12 weist einen Betätigungsabschnitt 16 auf, der aus dem Schaft 8 ragt. Der Betätigungsabschnitt 16 ist der gesamte Abschnitt des zweiten Bedienelements 12, der in unbetätigter Stellung des zweiten Bedienelements 12 aus dem Schaft 8 ragt. Der Betätigungsabschnitt 16 weist eine in Richtung der Längsachse 14 gemessene Länge c auf. Die Längen b und c können näherungsweise gleich groß sein. Im Ausführungsbeispiel ist die Länge b kleiner als die Länge c.

Der Betätigungsabschnitt 16 des zweiten Bedienelements 12 weist ein erstes Ende 17 und ein zweites Ende 18 auf. Das erste Ende 17 liegt näher am Befestigungsende 9 als das zweite Ende 18. Beide Betätigungsabschnitte 16 und 23 sind in Richtung der Längsachse 14 ausgerichtet. Das zweite Betätigungselement 12 ist um eine Schwenkachse 22 schwenkbar gelagert. Die Schwenkachse 22 liegt näher am ersten Ende 17 als am zweiten Ende 18 des Betätigungsabschnitts 16. Das erste Ende 17 weist im Ausführungsbeispiel zum Befestigungsende 9 in Richtung der Längsachse 14 einen größeren Abstand auf als die Schwenkachse 22. Die Schwenkachse 22 liegt im Ausführungsbeispiel in Richtung der Längsachse 14 zwischen dem ersten Ende 17 und dem Befestigungsende 9.

Die Betätigungsabschnitte 23 und 16 überlappen sich in unbetätigter Stellung der Bedienelemente 11 und 12 in einem Längenabschnitt 19. Der Längenabschnitt 19, in dem sich sowohl der Betätigungsabschnitt 23 als auch der Betätigungsabschnitt 16 erstrecken, weist eine in Richtung der Längsachse gemessene Länge a auf. Die Länge a beträgt vorteilhaft mindestens 30% der Länge b des Betätigungsabschnitts 23 des ersten Bedienelements 11. Bevorzugt beträgt die Länge a mindestens 50% der Länge b.

Der Schaft 8 des ersten Handgriffs 6 weist einen Griffabschnitt 45 auf. Der Griffabschnitt 45 weist eine längliche, in grober Näherung zylindrische Form auf. In Richtung auf das Befestigungsende 9 schließt an den Griffabschnitt 45 ein verdickter Abschnitt 46 an. In Richtung auf das freie Ende 10 schließt an den Griffabschnitt 45 ein verdickter Abschnitt 47 an. Die Länge t des Griffabschnitts 45, die in Richtung der Längsachse 14 gemessen ist, beträgt vorteilhaft ein Viertel bis drei Viertel der Gesamtlänge u des Handgriffs 6. Die Gesamtlänge u ist dabei parallel zur Längsachse 14 gemessen.

Der Handgriff 6 weist eine erste Hälfte 48 auf, die sich vom Befestigungsende 9 über die halbe Länge u erstreckt. Der Handgriff 6 weist außerdem eine zweite Hälfte 49 auf, die an die erste Hälfte 48 anschließt und bis an das freie Ende 10 ragt. Die zweite Hälfte 49 erstreckt sich über die Hälfte der Länge u. Der Griffabschnitt 45 ist mindestens teilweise in der ersten Hälfte 48 angeordnet. Im Ausführungsbeispiel erstreckt sich der Griffabschnitt 45 über mindestens 60% seiner Länge t in der ersten Hälfte 48. Der Griffabschnitt 45 ragt auch in die zweite Hälfte 49. Der Überlappungsbereich 19 ist im Ausführungsbeispiel vollständig in der zweiten Hälfte 49 angeordnet. Es kann auch vorgesehen sein, dass sich der Überlappungsbereich 19 teilweise in die erste Hälfte 48 erstreckt.

Die Auflagefläche 15 geht über eine Rundung 32 in die Rückseite 30 über. Die Rundung 32 ist konvex ausgebildet und verläuft im Ausführungsbeispiel gerundet. Der Radius r der Rundung 32 beträgt in Seitenansicht auf die Außenseite 28, die in Fig. 3 gezeigt ist, an jeder Stelle mindestens 1,5 cm, insbesondere mindestens 2 cm. Als besonders vorteilhaft wird ein Radius r von mindestens 3 cm angesehen. Der Radius r kann dabei im Verlauf der Rundung 32 variieren. Durch die Rundung 32 wird ein gleichmäßiger Übergang von der Rückseite 30 zur Auflagefläche 15 erreicht. An der Rundung 32 kann die Hand des Benutzers 51 gut entlanggleiten. Aufgrund der gerundeten Form der Rundung 32 kann dabei ein näherungsweise gleichbleibender Abstand zum gegenüberliegenden, ersten Bedienelement 11 eingehalten werden. Dadurch kann sichergestellt werden, dass der Benutzer 51 das Bedienelement 11 in jeder vorgesehenen Handhaltung greifen kann.

Der Schaft 8 weist eine Ballenauflage 33 auf. Die Ballenauflage 3 ist vorteilhaft am Griffabschnitt 45 angeordnet. Wie Fig. 3 zeigt, weist die Ballenauflage 33 eine parallel zur Längsachse 14 gemessene Länge k auf. Die Länge k beträgt vorteilhaft mindestens 2,5 cm, insbesondere mindestens 3,5 cm. Im Ausführungsbeispiel erstreckt sich die Ballenauflage 33 bis nahe an den verdickten Abschnitt 46.

Fig. 4 zeigt einen Schnitt durch den Handgriff 6 im Bereich der Ballenauflage 33. Der Schnitt verläuft senkrecht zur Längsachse 14. Die Ballenauflage 33 ist als eine nach außen ragende Erhebung aus dem ansonsten vorteilhaft näherungsweise runden Querschnitt des Griffabschnitts 45 gebildet. Die Ballenauflage 33 erstreckt sich im Ausführungsbeispiel an der Innenseite 29 und der Rückseite 30. Ihre größte radiale Erstreckung weist die Ballenauflage 33 näherungsweise in dem Bereich auf, in dem die Innenseite 29 und die Rückseite 30 aneinander angrenzen. Die Ballenauflage 33 weist eine Ballenauflagefläche 36 auf, die näherungsweise eben verläuft. Die Ballenauflagefläche 36 verläuft vorteilhaft an der Rückseite 30. Die Ballenauflage 33 weist einen maximalen Abstand o zur Längsachse 14 auf. Der Schnitt in Fig. 4 verläuft in dem Bereich, in dem die Ballenauflage 33 den maximalen Abstand o zur Längsachse 14 aufweist. In der gleichen Schnittebene, in der der maximale Abstand o besteht, weist der Handgriff 6 einen senkrecht zum maximalen Abstand o gemessenen Durchmesser p auf. Der maximale Abstand o ist vorteilhaft größer als der halbe Durchmesser p. Der maximale Abstand o beträgt vorteilhaft mindestens das 0,7fache, insbesondere mindestens das 0,8fache des Durchmessers p des Schafts 8.

Wie Fig. 4 auch zeigt, liegen die Schwenkachsen 21 und 22 der Bedienelemente 11 und 12 senkrecht zueinander. Die Schwenkachsen 21 und 22 schließen einen Winkel α ein, der vorteilhaft kleiner als 180° ist. Der Winkel α beträgt insbesondere weniger als 120°, bevorzugt etwa 90°. Im Ausführungsbeispiel spannen die Schwenkachsen 21 und 22 mit der Längsachse 14 ein Koordinatensystem auf. Die Längsachse 14 definiert die y-Richtung des Koordinatensystems. Die y-Achse weist vom Befestigungsende 9 zum freien Ende 10. Die Schwenkachse 21 des ersten Bedienelements 11 entspricht der z-Achse und die Schwenkachse 22 des zweiten Bedienelements 12 der x-Achse. Die x-Achse ist von der Rückseite 30 zur Vorderseite 27 gerichtet. Die z-Achse ist von der Innenseite 29 zur Außenseite 28 gerichtet. Die Achsen x, y und z bilden ein Rechtsdrehsystem. Die Ballenauflage 33 erstreckt sich in negative z-Richtung und negative x-Richtung. Die Ballenauflagefläche 36 ist zur z-Richtung um einen Winkel δ geneigt, der vorteilhaft an jeder Stelle weniger als 45°, insbesondere weniger als 30° beträgt. Die Ballenauflagefläche 36 weist an der Stelle, an der der maximale Abstand o zur Längsachse 14 besteht, einen in z-Richtung gemessenen Abstand v auf, der vorteilhaft mindestens dem 0,3fachen des Durchmessers p entspricht.

Wie die Fig. 5 und 6 zeigen, weist der erste Handgriff 6 eine Daumenfläche 20 auf. Die Daumenauflagefläche 20 erstreckt sich an der Innenseite 29 im verdickten Abschnitt 47.

Die Daumenauflagefläche 20 weist eine Breite g auf, die senkrecht zur Längsachse 14 gemessen ist. Die Daumenauflagefläche 20 weist zum freien Ende 10 einen in Richtung der Längsachse 14 gemessenen Abstand i auf. Für den ersten Handgriff 6 kann der Abstand i sehr klein sein. Die Daumenauflagefläche 20 kann bis nahe an das freie Ende 10 ragen.

Wie Fig. 5 zeigt, ist in der dargestellten Seitenansicht in Richtung der x-Achse auf die Rückseite 30 das dritte Bedienelement 13 weitgehend oder vollständig verdeckt. Das dritte Bedienelement 13 liegt in dieser Blickrichtung mindestens teilweise hinter der Daumenauflagefläche 20. Das dritte Bedienelement 13 ist von einer Abdeckung 68 abgedeckt. Wie die Fig. 5 und 6 zeigen, weist das dritte Bedienelement 13 eine dem Befestigungsende 9 zugewandt liegende Seite 62 (Fig. 6) auf. Im Ausführungsbeispiel ist das dritte Bedienelement 13 etwa parallel zur Daumenauflagefläche 20 ausgerichtet. Die Seite 62 verläuft geneigt zur Längsachse 14. Nahe der Seite 62 ist am Handgriff 6 eine Vertiefung 64 ausgebildet, die die Betätigung des dritten Bedienelements 13 an der Seite 62 erleichtert. Gegenüber der Vertiefung 64 weist das dritte Bedienelement 13 an der Seite 62 einen Überstand 63 auf. Der Überstand 63 beträgt vorteilhaft mindestens 1 mm, insbesondere mindestens 2 mm. Dadurch ist auch mit Handschuhen ein sicheres Betätigen des Bedienelements 13 an der Seite 62 möglich. Wie Fig. 5 auch zeigt, weist das zweite Bedienelement 12 zum freien Ende 10 einen parallel zur Längsachse 14 gemessenen Abstand e auf.

In den Fig. 6 bis 8 ist die Ausrichtung der Daumenauflagefläche 20 dargestellt. Wie Fig. 6 zeigt, ist die Daumenauflagefläche 20 in einer Blickrichtung auf die Innenseite 29, also bei Blickrichtung in Richtung der z-Achse, um einen Winkel β zur Längsachse 14 geneigt. Der Winkel β beträgt an jeder Stelle der Daumenauflagefläche 20 mindestens 20° und höchstens 70°. Dadurch wird zum einen eine ergonomische Handhaltung erreicht. Zum anderen ist aufgrund der Ausrichtung der Daumenauflagefläche 20 eine sehr gute Einleitung von Kräften zur Werkzeugeinheit 3 (Fig. 1) hin möglich, so dass sich insbesondere zum Schieben und Drücken des Werkzeugs günstige Kräfteverhältnisse ergeben.

In der in Fig. 6 dargestellten Seitenansicht ist die Daumenauflagefläche 20 bevorzugt konvex gekrümmt. Auch eine ebene oder konkav gekrümmte Gestaltung kann jedoch vorteilhaft sein. Die Daumenauflagefläche 20 liegt zwischen zwei parallelen Ebenen 34 und 35. Die Ebenen 34 und 35 verlaufen vorteilhaft zur Blattebene geneigt. Die Ebenen 34 und 35 verlaufen zu keiner der Achsen x, y und z des Koordinatensystems des Handgriffs 6 parallel. Die Ebenen 34 und 35 sind daher in Fig. 6 schematisch dargestellt. Die Daumenauflagefläche 20 ist dabei vorteilhaft so ausgebildet, dass der Abstand h der beiden Ebenen 34 und 35 weniger als 3 mm, insbesondere weniger als 2 mm beträgt. Die Breite g der Daumenauflagefläche 20 beträgt vorteilhaft mindestens 8 mm. Die Länge f der Daumenauflagefläche 20, die in Fig. 6 eingezeichnet ist, beträgt vorteilhaft mindestens 2,5 cm. Bevorzugt ist eine Länge f von mindestens 3 cm, insbesondere mindestens 4 cm vorgesehen. Die Länge f und die Breite g sind dabei in einem Bereich gemessen, der zwischen den Ebenen 34 und 35 liegt. Außerhalb der Ebenen 34 und 35 liegende, an die Daumenauflagefläche 20 angrenzende Flächenabschnitte werden vorliegend nicht als Teil der Daumenauflagefläche 20 betrachtet. Die Daumenauflagefläche 20 weist vorteilhaft eine Krümmung auf, deren Radius w an jeder Stelle mindestens 10 mm, insbesondere mindestens 15 mm, vorteilhaft mindestens 30 mm beträgt. Im Ausführungsbeispiel beträgt der Radius der Krümmung an jeder Stelle mindestens 40 mm. Auch eine ebene Gestaltung der Daumenauflagefläche 20, also ein unendlicher Radius, kann vorteilhaft sein. Die Daumenauflagefläche 20 geht mit einer Wölbung 31 in die Innenseite 29 des Handgriffs 6 über. Die Wölbung 31 ist konkav ausgebildet.

Wie die Fig. 7 und 8 zeigen, fällt die Daumenauflagefläche 20 in einer Richtung von der Längsachse 14 nach außen hin ab. Auch ein geringfügiges Ansteigen der Daumenauflagefläche in dieser Richtung kann jedoch vorteilhaft sein. In einer Schnittebene, die parallel zur Längsachse 14 und durch die Innenseite 29 verläuft, also eine Schnittebene in y-z-Ebene, schließt die Daumenauflagefläche 20 mit der Längsachse 14 einen Winkel γ ein, der zum Befestigungsende 9 öffnet. Der Winkel γ beträgt vorteilhaft 30° bis 110°. Besonders bevorzugt beträgt der Winkel γ 45° bis 90°. Der Winkel γ ist bevorzugt kleiner als 90°. In Fig. 8 ist auch der Überstand 63 des dritten Bedienelements 13 über die Vertiefung 64 gut erkennbar. Die Fig. 7 und 8 zeigen außerdem die Gestaltung der konkaven Wölbung 31. Die Wölbung 31 weist einen Radius s auf, der vergleichsweise klein, nämlich kleiner als 2 cm, insbesondere kleiner als 1 cm ausgebildet sein kann. Der Radius s muss dabei nicht durchgehend gleich groß sein, sondern kann variieren, wie Fig. 7 und 8 zeigen.

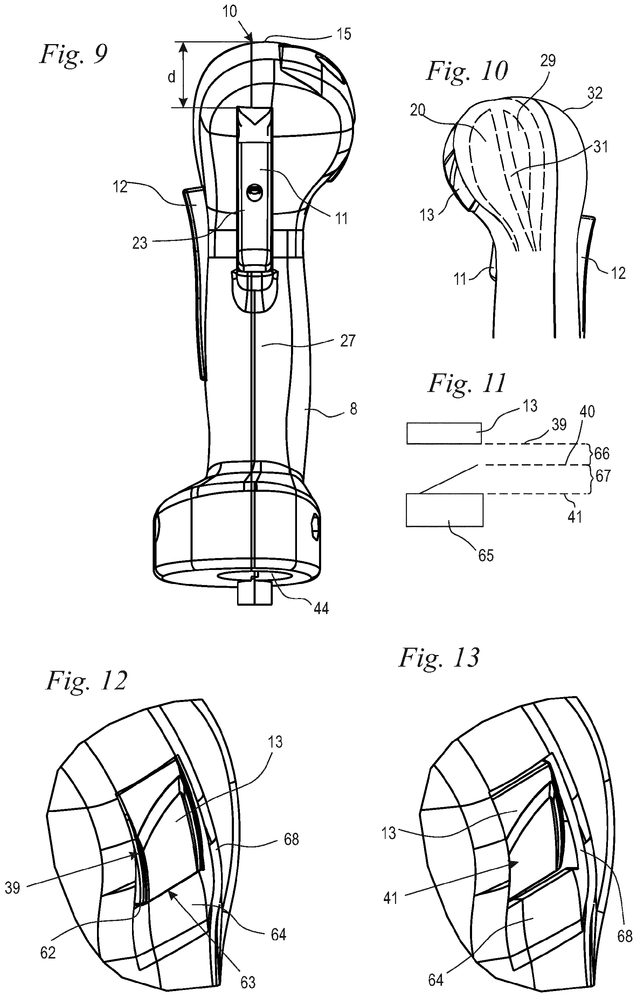

Wie Fig. 9 zeigt, weist der Betätigungsabschnitt 23 des ersten Bedienelements 11 zum freien Ende 10 einen Abstand d auf. Der Betätigungsabschnitt 16 des zweiten Bedienelements 12 weist zum freien Ende 10 den in Fig. 5 dargestellten Abstand e auf. Der Abstand e ist im Ausführungsbeispiel größer als der Abstand d. Die Abstände d und e betragen vorteilhaft jeweils weniger als 7 cm. Dadurch können die Bedienelemente 11 und 12 auch dann von einem Benutzer 51 betätigt werden, wenn die Hand des Benutzers 51 auf der Auflagefläche 15 aufliegt.

Auch in Fig. 10 ist die Gestaltung der Daumenauflagefläche 20, der Wölbung 31 und der hieran angrenzenden Innenseite 29 dargestellt.

Das zweite Bedienelement 13 ist so angeordnet, dass eine unbeabsichtigte Betätigung des zweiten Bedienelements 13 vermieden ist, auch wenn der Bediener seine Hand auf die Auflagefläche 15 am freien Ende 10 des Schafts 8 auflegt. Wie Fig. 11 schematisch zeigt, kann das zweite Bedienelement 13 beispielsweise einen schematisch dargestellten Schalter 65 betätigen. Auch eine Betätigung eines mechanischen Elements kann vorgesehen sein. Der Schalter 13 besitzt eine in Fig. 11 schematisch dargestellte unbetätigte Stellung 39 sowie eine betätigte Stellung 41, in der der Schalter 65 vollständig betätigt ist. Zwischen diesen Stellungen kann das Betätigungselement 13 zunächst einen Leerhub 66 zurücklegen. Innerhalb des Leerhubs 66 ist der Schalter 65 nicht betätigt. An den Leerhub 66 schließt sich ein Betätigungshub 67 an, in dem der Schalter 65 gedrückt wird. Die Position des dritten Bedienelements 13, in der das Bedienelement 13 den Leerhub 66 durchlaufen hat und beginnt, den Betätigungshub 67 auszuführen, wird vorliegend als Betätigungsposition 40 bezeichnet. Um eine unbeabsichtigte Betätigung des Schalters 65 zu verhindern, ist die Betätigungsposition 40 entscheidend, bei der der Betätigungshub 67 beginnt. Eine Betätigung des dritten Bedienelements 30 innerhalb des Leerhubs 66 ist für die Funktion des Freischneiders 1 ohne Bedeutung.

Fig. 12 zeigt das dritte Bedienelement 13 in unbetätigter Stellung 39. Das zweite Bedienelement 13 ist im Ausführungsbeispiel von der Abdeckung 68 in Richtung auf die Daumenauflagefläche 20 und das freie Ende 10 hin verdeckt. Die Abdeckung 68 ist dabei mindestens so groß, dass das dritte Bedienelement 13 in der Betätigungsposition 40 bei Blickrichtung in Richtung der Längsachse 14 auf das Befestigungsende 9 über höchstens 1 mm über die Außenkontur des Handgriffs 6, 7, also über die Abdeckung 68 vorsteht.

Fig. 13 zeigt das dritte Bedienelement 13 in betätigter Stellung 41. Das Bedienelement 13 ist im Ausführungsbeispiel tiefer in den Schaft 8 eingedrückt als die Vertiefung 64, so dass die Vertiefung 64 über das Bedienelement 13 an der Seite 62 vorsteht. Es kann jedoch auch vorgesehen sein, dass das dritte Bedienelement 13 eben mit dem Boden der Vertiefung 64 abschließt oder über diesen hervorsteht. Ein Verstellen des dritten Bedienelements 13 aus der in Fig. 12 dargestellten unbetätigten Stellung 39 in die in Fig. 13 gezeigte betätigte Stellung 41 ist aufgrund der Abdeckung 68 vorteilhaft nur dann möglich, wenn der Bediener aktiv das Bedienelement 13 drückt. Eine unbeabsichtigte Betätigung ist aufgrund der Abdeckung 68 vermieden.

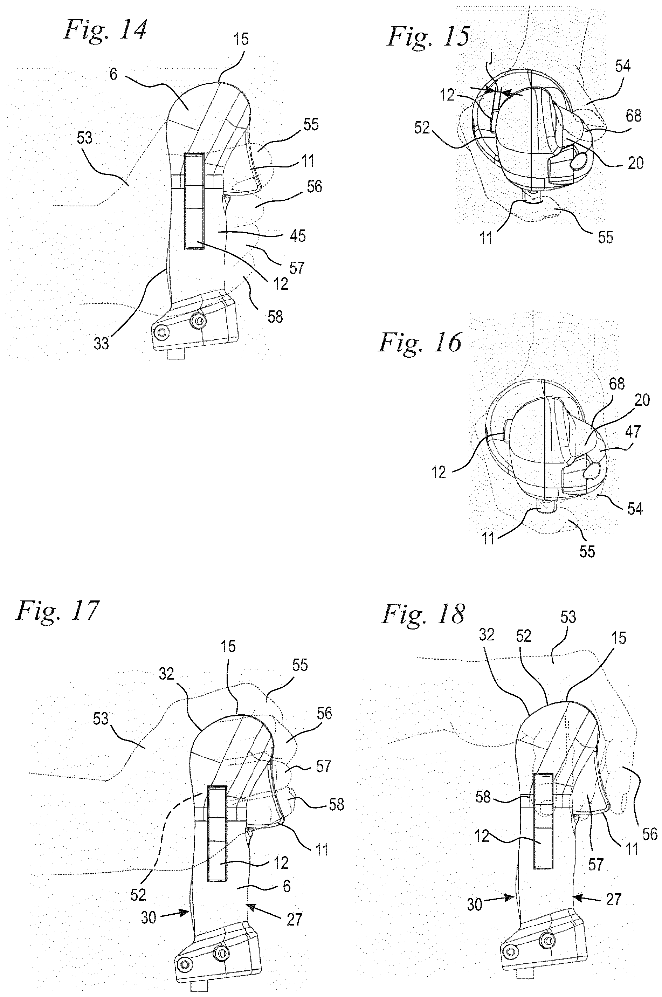

Die Fig. 14 bis 18 zeigen unterschiedliche mögliche Greifpositionen für den Handgriff 6. Fig. 14 zeigt den Handgriff 6 schematisch mit der Hand 53 eines Benutzers 51 (Fig. 1). Die Hand 53 des Benutzers 51 umschließt den Griffabschnitt 45. Der Handballen liegt an der Ballenauflage 33 an. Der Handteller 52 (Fig. 15) liegt am zweiten Bedienelement 12 an und betätigt dieses. Der Zeigefinger 55 liegt am ersten Bedienelement 11 an und kann dieses betätigen. Der Mittelfinger 56, der Ringfinger 57 und der kleine Finger 58 umschließen den Griffabschnitt 45. Für diese Handhaltung sind zwei mögliche Positionen für den Daumen 54 vorgesehen. Fig. 15 zeigt eine Anordnung, bei der der Daumen 54 auf der Daumenauflagefläche 20 aufliegt und sich an dieser abstützt. Bei der in Fig. 16 dargestellten Position liegt der Daumen 55 unterhalb des verdickten Abschnitts 47. Der Daumen 54 kann in dieser Position den Griffabschnitt 54 umschließen. Wie Fig. 15 zeigt, kann der Daumen 54 jedoch auch das dritte Bedienelement 13 betätigen. In diesem Fall liegt der Daumen 54 unterhalb der Verdickung 68 (Fig. 12 und 13).

Wie die Ansichten in Fig. 15 und 16 in Richtung der Längsachse 14 zum Befestigungsende 9 hin zeigen, ist das dritte Bedienelement 13 in dieser Blickrichtung von der Abdeckung 68 vollständig verdeckt. Das dritte Bedienelement 13 ist in dieser Ansicht nicht sichtbar. Die Daumenauflagefläche 20 ist vorteilhaft vergleichsweise groß ausgebildet. In der Blickrichtung in Richtung der Längsachse 14 zum Befestigungsende 9 hin beträgt die Fläche der Daumenauflagefläche 20 vorteilhaft mindestens 10%, insbesondere mindestens 20%, bevorzugt mindestens 25% der gesamten sichtbaren Fläche des verdickten Abschnitts 47 des ersten Handgriffs 6. Vorteilhaft beträgt die Fläche der Daumenauflagefläche 20 in der Blickrichtung in Richtung der Längsachse 14 zum Befestigungsende 9 hin weniger als 70%, insbesondere weniger als 50%, insbesondere weniger als 30% der gesamten sichtbaren Fläche des verdickten Abschnitts 47 des ersten Handgriffs 6.

In Fig. 15 ist das zweite Bedienelement 12 in betätigter Position gezeigt. In dieser Position steht das zweite Bedienelement 12 vorteilhaft nur geringfügig oder nicht über die Außenkontur des Schafts 8 über. Im Ausführungsbeispiel ist vorgesehen, dass das zweite Bedienelement 12 in betätigter Position um einen Überstand j über die Außenkontur des Schafts 8 vorsteht, der höchstens 3 mm, insbesondere höchstens 2 mm beträgt. Der Überstand j beträgt vorteilhaft an keiner Stelle des zweiten Bedienelements 12 mehr als 3 mm, insbesondere mehr als 2 mm.

Fig. 17 zeigt eine Handposition, in der die Hand 53 teilweise an der Auflagefläche 15 abgestützt ist, und zwar vorteilhaft mit der Innenseite des Zeigefingers 55. Der Mittelfinger 56 umschließt die Verdickung 47. Der Ringfinger 57 und der kleine Finger 58 liegen am ersten Bedienelement 11 an und können dieses betätigen. Der Handteller 52 des Benutzers 51 ist am zweiten Bedienelement 12 angeordnet und kann das zweite Bedienelement 12 betätigen.

In Fig. 18 ist eine Handhaltung gezeigt, bei der der Handteller 52 der Hand 53 auf der Auflagefläche 15 anliegt. Das zweite Bedienelement 12 kann mit dem kleinen Finger 58 gegriffen werden. Die Betätigung des ersten Bedienelements 11 ist für den Mittelfinger 56 vorgesehen. Auch eine Betätigung mit dem Zeigefinger 55 oder dem Ringfinger 57 kann vom Benutzer 51 bevorzugt werden. Aufgrund der Abstände d und e der Bedienelemente 11 und 12 von weniger als 7 cm zum freien Ende 10 (Figuren 5 und 9) ist eine Betätigung der Bedienelemente 11 und 12 auch bei der in Fig. 18 dargestellten Handposition ohne weiteres möglich.

Aufgrund der durchgehenden Rundung 32 kann der Benutzer 51 zwischen den unterschiedlichen Handpositionen dadurch wechseln, dass die Hand 53 an der Rundung 32 entlanggeschoben wird. Dadurch ergibt sich ein ergonomisches Arbeiten auch über längere Zeiträume.

Die Fig. 19 bis 25 zeigen die Gestaltung des zweiten Handgriffs 7. Der zweite Handgriff 7 ist vorteilhaft ein linker Handgriff. Der zweite Handgriff 7 weist im Ausführungsbeispiel keine Bedienelemente auf. Der zweite Handgriff 7 kann dadurch insgesamt kleiner als der erste Handgriff 6 ausgebildet sein. Die beiden Handgriffe 6 und 7 weisen eine unterschiedliche Form auf. Auch der zweite Handgriff 7 weist jedoch wie der erste Handgriff 6 eine Daumenauflagefläche 20, eine Auflagefläche 15 am freien Ende 10 sowie eine Ballenauflagefläche 33 auf. Gleiche Bezugszeichen kennzeichnen für beide Handgriffe einander entsprechende Elemente.

Auch der zweite Handgriff 7 weist einen Schaft 8 auf, der ein Befestigungsende 9 sowie ein freies Ende 10 aufweist. Am Befestigungsende 9 ist eine nicht dargestellte Aufnahme 44 für den Lenkerholm 43 vorgesehen. Auch der zweite Handgriff 7 weist eine Längsachse 14 auf, die vorteilhaft mit einer y-Achse zusammenfällt. Die y-Achse ist vom Befestigungsende 9 zum freien Ende 10 gerichtet. Von der Rückseite 30 zur Vorderseite 27 verläuft eine x-Achse. Die z-Achse weist, wie Fig. 20 zeigt, von der Außenseite 28 zur Innenseite 29. Die Achsen bilden ein Rechtsdrehsystem.

Wie Fig. 19 zeigt, schließt die Daumenauflagefläche 20 mit der Längsachse 14 einen Winkel β ein. Der Winkel β beträgt auch für den zweiten Handgriff 7 mindestens 20° und höchstens 70°. Im Ausführungsbeispiel ist der Winkel β für den zweiten Handgriff 7 geringfügig größer als der Winkel β für den ersten Handgriff 6. Dadurch, dass beim zweiten Handgriff 7 kein drittes Bedienelement 13 benachbart zur Daumenauflagefläche 20 anzuordnen ist, kann die Ausrichtung der Daumenauflagefläche 20 freier gewählt werden. Die Daumenauflagefläche 20 des zweiten Handgriffs 7 liegt zwischen den Ebenen 34 und 35, die vorteilhaft einen Abstand h von weniger als 3 mm, insbesondere von weniger als 2 mm aufweisen. Die Daumenauflagefläche 20 ist im Ausführungsbeispiel geringfügig konkav gewölbt. An den konkaven Abschnitt schließen sich konvexe Abschnitte an. Die Wölbung der Daumenauflagefläche 20 weist an jeder Stelle einen Radius w auf, der mindestens 10 mm, insbesondere mindestens 15 mm beträgt. Der kleinste Radius w des zweiten Handgriffs 7 ist insbesondere kleiner als der kleinste Radius w des ersten Handgriffs 6. Auch eine ebene Gestaltung der Daumenauflagefläche 20 kann vorteilhaft sein. Die Daumenauflagefläche 20 weist zum freien Ende einen Abstand e auf. Der Abstand e beträgt im Ausführungsbeispiel für den zweiten Handgriff 7 mindestens 1 cm. Die Daumenauflagefläche 20 weist eine Länge f auf, die mindestens 2,5 cm, insbesondere mindestens 3 cm beträgt. Die Daumenauflagefläche 20 weist eine Breite g, die vorteilhaft mindestens 8 mm, insbesondere mindestens 1 cm beträgt.

In Fig. 20 ist die Gestaltung der Ballenauflage 33 im Einzelnen gezeigt. Die Ballenauflage 33 bildet eine Ballenauflagefläche 36 aus, die an der Rückseite 29 des zweiten Handgriffs 7 verläuft. Die Ballenauflagefläche 36 ist näherungsweise eben und kann in einer Schnittebene parallel zur Längsachse 14 geringfügig konkav gewölbt sein. Auch eine konvexe Wölbung ist möglich. Der maximale Abstand o und dessen Verhältnis zum Durchmesser p entspricht denen beim ersten Handgriffs 6. Wie Fig. 20 zeigt, ist die Ballenauflagefläche 36 zur z-y-Ebene in der dargestellten Schnittebene senkrecht zur y-Achse um einen Winkel δ geneigt. Der Winkel δ der Ballenauflagefläche 36 des zweiten Handgriffs 7 kann größer als der Winkel δ für den ersten Handgriff 6 sein. Auch gleiche Winkel δ können vorgesehen sein.

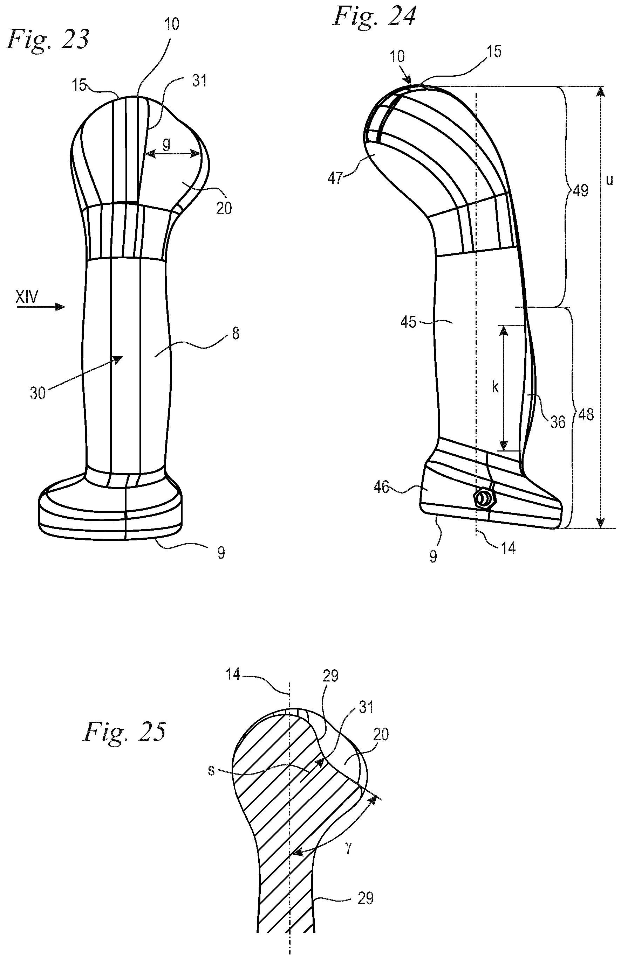

In Fig. 21 sind die Breite g und die Länge f der Daumenauflagefläche 20 gut erkennbar. Wie Fig. 22 zeigt, ist die Wölbung 31, mit der die Auflagefläche 20 in die Innenseite 29 übergeht, deutlich größer als beim ersten Handgriff 6. Dies ist auch in Fig. 23 und Fig. 25 erkennbar. Wie Fig. 25 zeigt, ist der Radius s der Wölbung 31 vorteilhaft größer als 2 mm, insbesondere größer als 5 mm. Die Daumenauflagefläche 20 schließt in einer Schnittebene 20 parallel zur Längsachse 14 mit der Längsachse 14 den Winkel γ ein, der dem zum ersten Handgriff 6 beschriebenen Winkel γ entspricht.

Wie Fig. 24 zeigt, ist die Ballenauflage 36 in der ersten Hälfte 48 des Griffabschnitts 45 angeordnet. Wie Fig. 24 auch zeigt, weist die Ballenauflagefläche 36 eine in Richtung der Längsachse 14 gemessene Länge k auf. Wie Fig. 24 zeigt, weist die Ballenauflagefläche 36 eine in Richtung der Längsachse 14 gemessene Länge k auf. Die Länge k beträgt vorteilhaft mindestens 2,5 cm, insbesondere mindestens 3,5 cm. Der zweite Handgriff 7 weist eine in Fig. 24 eingezeichnete Länge u auf. Die Länge u des zweiten Handgriffs 7 ist vorzugsweise kleiner als die Länge u des ersten Handgriffs 6.

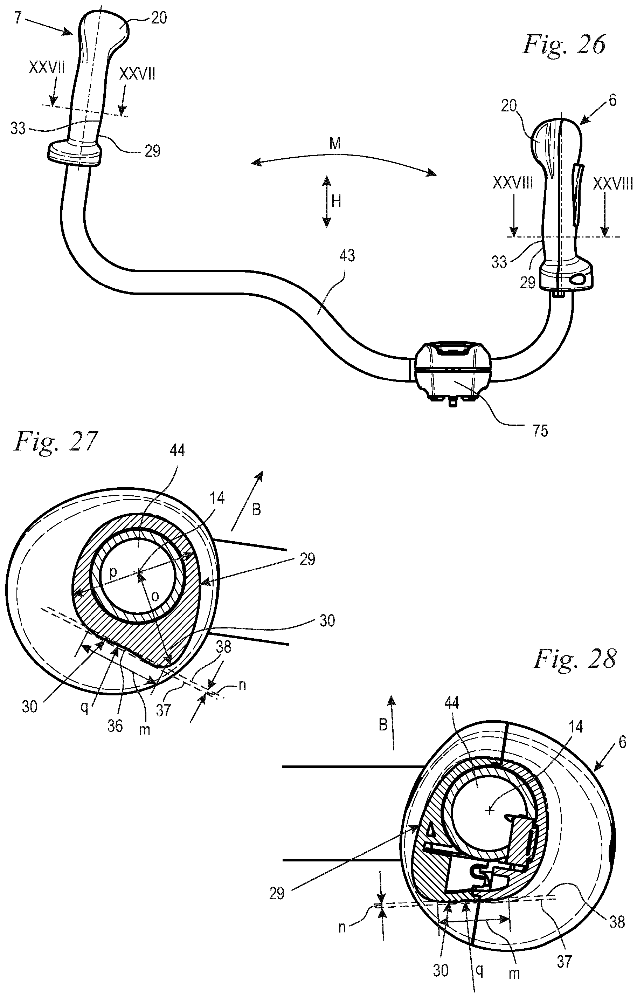

Fig. 26 zeigt die Gestaltung des Lenkergriffs 5. Am Lenkerholm 43 ist eine Befestigungseinrichtung 75 dargestellt, mit der der Lenkerholm 43 am Führungsrohr 2 fixiert werden kann. Die Befestigungseinrichtung 75 erlaubt vorteilhaft eine Anpassung der Position des Lenkerholms 43 in Längsrichtung des Führungsrohrs 2 und/oder ein Schwenken des Lenkerholms 43 um die Befestigungseinrichtung 75, um so die Neigung des Lenkerholms 43 und die Neigung der Handgriffe 6 und 7 einstellbar zu machen. In Fig. 26 sind auch die Daumenauflageflächen 22 der beiden Handgriffe 6 und 7 dargestellt. In Fig. 26 sind auch die Bewegungsrichtungen M für den Mähbetrieb und H für den Häckselbetrieb eingezeichnet.

Die Fig. 27 und 28 zeigen jeweils einen Schnitt durch die Ballenauflage 33 in dem Bereich, in dem die Ballenauflage 33 den maximalen Abstand o zur Längsachse 14 aufweist.

Wie Fig. 27 zeigt, weist die Ballenauflagefläche 36 des zweiten Handgriffs 7 eine Breite m auf. Die Breite m beträgt vorteilhaft mindestens 8 mm, insbesondere mindestens 1 cm. Über die Breite m und die Länge k liegt die Ballenauflagefläche 36 zwischen zwei parallel zueinander verlaufenden Ebenen 37 und 38. Die beiden Ebenen 37 und 38 weisen einen Abstand n zueinander auf, der vorteilhaft weniger als 3 mm beträgt. Die Länge k und die Breite m sind in dem Bereich der Ballenauflagefläche 36 gemessen, der zwischen den Ebenen 37 und 38 liegt.

Wie Fig. 28 zeigt, weist die Ballenauflagefläche 36 des ersten Handgriffs 6 eine Breite m auf, die vorteilhaft mindestens 8 mm, insbesondere mindestens 1 cm beträgt. Die Ballenauflagefläche 36 liegt zwischen zwei parallelen Ebenen 37 und 38, deren Abstand n vorteilhaft höchstens 3 mm beträgt. Die Länge k (Fig. 3) und die Breite m sind in dem Bereich der Ballenauflagefläche 36 gemessen, der zwischen den Ebenen 37 und 38 liegt.

Wie die Fig. 27 und 28 auch zeigen, weisen die Ballenauflageflächen 36, insbesondere die Ballenauflagefläche 36 des ersten Handgriffs 6, in der dargestellten Schnittebene senkrecht zur Längsachse 14 einen Radius q auf, der an jeder Stelle mindestens 10 mm, insbesondere mindestens 15 mm beträgt. Die Ballenauflagefläche 36 kann dabei in der dargestellten Schnittebene konkav und/oder konvex verlaufen. Auch ein mindestens abschnittsweise ebener Verlauf oder ein durchgehend ebener Verlauf kann vorteilhaft sein. Insbesondere für die Ballenauflagefläche 36 des zweiten Handgriffs 7 können auch kleinere Radien vorgesehen sein. Der Radius q des mittleren, konkaven Bereichs beträgt vorteilhaft mindestens 10 mm, insbesondere mindestens 15 mm. Die daran in Umfangsrichtung anschließenden konvexen Bereiche können Radien aufweisen, die kleiner als 10 mm sind.

Aufgrund der Ausrichtung der Ballenauflagefläche 36 ist über die Ballenauflagefläche 36 eine gute Krafteinleitung in einer Kraftrichtung B möglich. Die Kraftrichtungen B der beiden Handgriffe 6 und 7 können dabei geneigt zueinander verlaufen, wie die Fig. 27 und 28 zeigen. Die Kraftrichtung B verläuft vorteilhaft quer zur Ballenauflagefläche 36. Die Kraftrichtung B verläuft insbesondere senkrecht zu den Ebenen 37 und 38. Die Ballenauflagefläche 36 ist vorteilhaft quer, insbesondere senkrecht zur Richtung auf die Werkzeugeinheit 3 ausgerichtet. Dadurch können über die Ballenauflagefläche 36 Kräfte in Richtung auf die Werkzeugeinheit 3 gut eingeleitet werden.

Durch Drücken an der Ballenauflagefläche 36 eines Handgriffs 6, 7 und Halten oder Ziehen am anderen Handgriff 6, 7 kann eine Kraft in Bewegungsrichtung M für den Mähbetrieb einfach und ergonomisch eingeleitet werden. Durch Drücken an der Ballenauflagefläche 36, insbesondere Drücken an den Ballenauflageflächen 36 beider Handgriffe 6, 7, kann die Werkzeugeinheit 3 nach unten gedrückt und dadurch eine Kraft in Bewegungsrichtung H für den Häckselbetrieb gut und ergonomisch eingeleitet werden.

Die Ballenauflage 33 ist als sich an der Innenseite 29 und der Rückseite 30 des Schafts 8 erstreckende Erhebung ausgebildet. Die Ballenauflage 33 ist für beide Handgriffe 6, 7 mindestens teilweise, insbesondere vollständig in der ersten Hälfte 48 des jeweiligen Handgriffs 6, 7 angeordnet. Wie in Fig. 20 für den zweiten Handgriff 7 dargestellt, weist der Handgriff 7 eine Gummierung 69 auf. Vorteilhaft weist jeder Handgriff 6, 7 mindestens in einem Abschnitt, insbesondere über die gesamte Außenfläche des Schafts 8 eine Gummierung auf. Dadurch wird ein verbesserter Halt der Hand 52 des Benutzers 51 am Handgriff 6, 7 erreicht.

Weitere Merkmale des zweiten Handgriffs 7 entsprechen den Merkmalen des ersten Handgriffs 6, auf dessen Beschreibung hierzu verwiesen wird.

## Patentansprüche

1. Handgriff (6, 7) für ein handgeführtes Arbeitsgerät, wobei der Handgriff (6, 7) einen Schaft (8) aufweist, der ein Befestigungsende (9), an dem der Handgriff (6, 7) festgelegt ist, und ein freies Ende (10) aufweist, wobei der Handgriff (6, 7) eine Außenseite (28) aufweist, die mindestens teilweise zur Anlage an einem Handteller (52) eines Benutzers (51) vorgesehen ist, wobei der Handgriff (6, 7) eine der Außenseite (28) gegenüberliegende Innenseite (29) aufweist, wobei der Handgriff (6, 7) eine Längsachse (14) aufweist, wobei der Schaft (8) mit seinem freien Ende (10) eine Auflagefläche (15) für eine Hand eines Benutzers bildet, **dadurch gekennzeichnet, dass** an der Innenseite (29) des Handgriffs (6, 7) eine Daumenauflagefläche (20) angeordnet ist, die in einer Seitenansicht senkrecht auf die Innenseite (29) mit der Längsachse (14) an jeder Stelle einen Winkel (β) von mindestens 20° und höchstens 70° einschließt.

2. Handgriff nach Anspruch 1,
**dadurch gekennzeichnet, dass** die Daumenauflagefläche (20) zwischen zwei parallel zueinander verlaufenden Ebenen (34, 35) liegt, deren Abstand (h) weniger als 3 mm beträgt, und dass die Daumenauflagefläche (20) eine Länge (f) von mindestens 2,5 cm und eine Breite (g) von mindestens 8 mm aufweist.

3. Handgriff nach Anspruch 1 oder 2,
**dadurch gekennzeichnet, dass** die Daumenauflagefläche (20) zum freien Ende (10) des Schafts (8) einen Abstand (i) von mindestens 1 cm aufweist.

4. Handgriff nach einem der Ansprüche 1 bis 3,
**dadurch gekennzeichnet, dass** die Daumenauflagefläche (20) mit einer konkaven Wölbung (31) in die Innenseite (29) des Handgriffs (6, 7) übergeht.

5. Handgriff nach einem der Ansprüche 1 bis 4,
**dadurch gekennzeichnet, dass** die Daumenauflagefläche (20) in einer Schnittebene, die parallel zur Längsachse (14) und durch die Innenseite (29) verläuft, mit der Längsachse (14) einen Winkel (γ) einschließt, der zum Befestigungsende (9) öffnet und der 30° bis 110°, insbesondere 45° bis 90° beträgt.

6. Handgriff nach einem der Ansprüche 1 bis 5,
**dadurch gekennzeichnet, dass** die Auflagefläche (15) über eine kontinuierliche Rundung (32) in eine in Umfangsrichtung des Schafts (8) zwischen der Innenseite (29) und der Außenseite (28) verlaufende Rückseite (30) übergeht.

7. Handgriff nach Anspruch 6,
**dadurch gekennzeichnet, dass** die Rundung (32) in einer Seitenansicht auf die Außenseite (28) an jeder Stelle einen Radius (r) von mindestens 1,5 cm, insbesondere von mindestens 2 cm aufweist.

8. Handgriff nach einem der Ansprüche 1 bis 7,
**dadurch gekennzeichnet, dass** an dem Schaft (8) ein erstes Bedienelement (11) um eine erste Schwenkachse (21) schwenkbar gelagert ist und ein zweites Bedienelement (12) um eine zweite Schwenkachse (22), wobei das erste Bedienelement (11) zur Ansteuerung des Antriebsmotors (26) ausgebildet ist und wobei das zweite Bedienelement (12) in unbetätigter Position die Ansteuerung des Antriebsmotors (26) über das erste Bedienelement (11) verhindert.

9. Handgriff nach Anspruch 8,
**dadurch gekennzeichnet, dass** die Längsachse (14) senkrecht zur ersten Schwenkachse (21) und senkrecht zur zweiten Schwenkachse (22) ausgerichtet ist und dass die erste Schwenkachse (21) und die zweite Schwenkachse (22) bei Blickrichtung in Richtung der Längsachse (14) einen Winkel (α) von weniger als 180°, insbesondere von weniger als 120°, bevorzugt von etwa 90° einschließen.

10. Handgriff nach Anspruch 8 oder 9,
**dadurch gekennzeichnet, dass** das zweite Bedienelement (12) in unbetätigter Stellung einen aus dem Schaft (8) ragenden Betätigungsabschnitt (16) aufweist, der ein erstes, dem Befestigungsende (9) näher liegendes Ende (17) und ein zweites, dem freien Ende (10) des Schafts (8) näher liegendes Ende (18) aufweist, und dass die zweite Schwenkachse (22) näher an dem ersten Ende (17) des Betätigungsabschnitts (16) angeordnet ist als an dem zweiten Ende (18).

11. Handgriff nach Anspruch 10,
**dadurch gekennzeichnet, dass** der Betätigungsabschnitt (16) des zweiten Bedienelements (12) in betätigter Stellung des zweiten Bedienelements (12) an keiner Stelle um mehr als 3 mm über die Außenkontur des Schafts (8) vorsteht.

12. Handgriff nach einem der Ansprüche 8 bis 11,
**dadurch gekennzeichnet, dass** das erste Bedienelement (11) in unbetätigter Stellung einen aus dem Schaft (8) ragenden Betätigungsabschnitt (23) aufweist, der ein erstes, dem Befestigungsende (9) näher liegendes Ende (24) und ein zweites, dem freien Ende (10) des Schafts (8) näher liegendes Ende (25) aufweist, und dass die erste Schwenkachse (21) näher an dem zweiten Ende (25) des Betätigungsabschnitts (23) angeordnet ist als an dem ersten Ende (24).

13. Handgriff nach einem der Ansprüche 8 bis 12,
**dadurch gekennzeichnet, dass** der Betätigungsabschnitt (16, 23) mindestens eines Bedienelements (11, 12) zum freien Ende (10) des Schafts (8) einen Abstand (d, e) von weniger als 7 cm aufweist.

14. Handgriff nach einem der Ansprüche 8 bis 13,
**dadurch gekennzeichnet, dass** der Betätigungsabschnitt (16) des ersten Bedienelements (11) und der Betätigungsabschnitt (23) des zweiten Bedienelements (12) sich über einen Längenabschnitt (19) des Schafts (8) überlappen, dessen in Richtung der Längsachse (14) gemessene Länge (a) mindestens 30%, insbesondere mindestens 50% der in gleicher Richtung gemessenen Länge (b) des Betätigungsabschnitts (23) des ersten Bedienelements (11) beträgt.

15. Handgriff nach einem der Ansprüche 8 bis 14,
**dadurch gekennzeichnet, dass** das erste Bedienelement (11) an einer in Umfangsrichtung des Schafts (8) zwischen der Innenseite (29) und der Außenseite (28) verlaufenden, zur Anlage an den Fingern eines Benutzers vorgesehenen Vorderseite (27) angeordnet ist und das zweite Bedienelement (12) an der Außenseite (28) angeordnet ist.

16. Handgriff nach einem der Ansprüche 1 bis 15,
**dadurch gekennzeichnet, dass** der Handgriff (6) ein drittes Bedienelement (13) aufweist, wobei das dritte Bedienelement (13) an der Innenseite (29) angeordnet ist, wobei das dritte Bedienelement (13) eine Betätigungsposition (40) aufweist, in der das dritte Bedienelement (13) bei einer Bewegung von einer unbetätigten Stellung (39) zu seiner betätigten Stellung (41) beginnt, einen Betätigungshub (67) auszuführen, und wobei das dritte Bedienelement (13) in Betätigungsposition (40) bei Blickrichtung in Richtung der Längsachse (14) auf das Befestigungsende (9) über höchstens 1 mm über die Außenkontur des Handgriffs (6, 7) vorsteht, insbesondere hinter der Außenkontur des Handgriffs (6, 7) liegt.

17. Handgriff nach Anspruch 16,
**dadurch gekennzeichnet, dass** das dritte Bedienelement (13) in unbetätigter Stellung an mindestens einer Seite, insbesondere an seiner dem Befestigungsende (9) zugewandten Seite, über die Kontur des Schafts (8) vorsteht.

18. Handgriff nach einem der Ansprüche 1 bis 17,
**dadurch gekennzeichnet, dass** der Schaft (8) des Handgriffs (6) einen Griffabschnitt (45) aufweist, der eine längliche, in grober Näherung zylindrische Form aufweist, und dass in Richtung auf das Befestigungsende (9) ein verdickter Abschnitt (46) an den Griffabschnitt (45) anschließt.

19. Freischneider mit einem Führungsrohr (2), wobei an einem Ende (42) des Führungsrohrs (2) eine Werkzeugeinheit (3) angeordnet ist, wobei an dem Führungsrohr (2) ein Lenkerholm (43) festgelegt ist, der an jedem Ende einen Handgriff (6, 7) nach einem der Ansprüche 1 bis 18 trägt, wobei jeder Handgriff (6, 7) an dem Befestigungsende (9) des Schafts (8) am Lenkerholm (43) festgelegt ist, wobei jeder Handgriff (6, 7) eine der Werkzeugeinheit (3) zugewandt liegende Vorderseite (27) und eine gegenüberliegende Rückseite (30) aufweist, wobei die Innenseiten (29) der Handgriffe (6, 7) einander zugewandt liegen und wobei die Außenseiten (28) der Handgriffe (6, 7) einander abgewandt sind.

## Claims

1. Handle (6, 7) for a hand-held implement, wherein the handle (6, 7) has a shaft (8), said shaft having a fastening end (9), at which the handle (6, 7) is fixed, and having a free end (10), wherein the handle (6, 7) has an outer side (28) which is at least partially intended for abutment against the palm (52) of a hand of a user (51), wherein the handle (6, 7) has an inner side (29) which is situated opposite the outer side (28), wherein the handle (6, 7) has a longitudinal axis (14), wherein the shaft (8) forms at its free end (10) a bearing surface (15) for a hand of a user, **characterized in that**, on the inner side (29) of the handle (6, 7), there is arranged a thumb bearing surface (20) which, in a side view perpendicular to the inner side (29), includes with the longitudinal axis (14) an angle (β) of at least 20° and at most 70° at every point.

2. Handle according to Claim 1,
**characterized in that** the thumb bearing surface (20) is situated between two planes (34, 35) which are parallel to one another, the spacing (h) of said planes being less than 3 mm, and **in that** the thumb bearing surface (20) has a length (f) of at least 2.5 cm and a width (g) of at least 8 mm.

3. Handle according to Claim 1 or 2,
**characterized in that** the thumb bearing surface (20) has a spacing (i) of at least 1 cm to the free end (10) of the shaft (8).

4. Handle according to one of Claims 1 to 3,
**characterized in that** the thumb bearing surface (20) transitions into the inner side (29) of the handle (6, 7) by way of a concave curvature (31).

5. Handle according to one of Claims 1 to 4,
**characterized in that**, in a section plane parallel to the longitudinal axis (14) and through the inner side (29), the thumb bearing surface (20) includes with the longitudinal axis (14) an angle (γ) which opens towards the fastening end (9) and is 30° to 110°, in particular 45° to 90°.

6. Handle according to one of Claims 1 to 5,
**characterized in that** the bearing surface (15) transitions via a continuous rounding (32) into a rear side (30), said rear side extending between the inner side (29) and the outer side (28) in a peripheral direction of the shaft (8).

7. Handle according to Claim 6,
**characterized in that**, in a side view of the outer side (28), the rounding (32) has a radius (r) of at least 1.5 cm, in particular of at least 2 cm, at every point.

8. Handle according to one of Claims 1 to 7,
**characterized in that**, on the shaft (8), a first operating element (11) is mounted so as to be pivotable about a first pivot axis (21), and a second operating element (12) is mounted so as to be pivotable about a second pivot axis (22), wherein the first operating element (11) is configured for activating the drive motor (26), and wherein the second operating element (12), in the non-actuated position, prevents activation of the drive motor (26) via the first operating element (11).

9. Handle according to Claim 8,
**characterized in that** the longitudinal axis (14) is oriented perpendicularly to the first pivot axis (21) and perpendicularly to the second pivot axis (22), and **in that**, in a viewing direction in the direction of the longitudinal axis (14), the first pivot axis (21) and the second pivot axis (22) include an angle (α) of less than 180°, in particular of less than 120°, preferably of approximately 90°.

10. Handle according to Claim 8 or 9,
**characterized in that** the second operating element (12) has an actuation portion (16) which protrudes from the shaft (8) in the non-actuated position, which actuation portion has a first end (17) and a second end (18), said first end being situated closer to the fastening end (9) and said second end being situated closer to the free end (10) of the shaft (8), and **in that** the second pivot axis (22) is positioned closer to the first end (17) of the actuation portion (16) than to the second end (18).

11. Handle according to Claim 10,
**characterized in that**, in the actuated position of the second operating element (12), the actuation portion (16) of the second operating element (12) does not project beyond the outer contour of the shaft (8) by more than 3 mm at any point.

12. Handle according to one of Claims 8 to 11,
**characterized in that** the first operating element (11) has an actuation portion (23) which protrudes from the shaft (8) in the non-actuated position, which actuation portion has a first end (24) and a second end (25), said first end being situated closer to the fastening end (9) and said second end being situated closer to the free end (10) of the shaft (8), and **in that** the first pivot axis (21) is positioned closer to the second end (25) of the actuation portion (23) than to the first end (24).

13. Handle according to one of Claims 8 to 12,
**characterized in that** the actuation portion (16, 23) of at least one operating element (11, 12) has a spacing (d, e) of less than 7 cm to the free end (10) of the shaft (8).

14. Handle according to one of Claims 8 to 13,
**characterized in that** the actuation portion (16) of the first operating element (11) and the actuation portion (23) of the second operating element (12) overlap over a length portion (19) of the shaft (8), the length (a) of which length portion, as measured in the direction of the longitudinal axis (14), is at least 30%, in particular at least 50%, of the length (b) of the actuation portion (23) of the first operating element (11), as measured in the same direction.

15. Handle according to one of Claims 8 to 14,
**characterized in that** the first operating element (11) is arranged on a front side (27), said front side extending between the inner side (29) and the outer side (28) in a peripheral direction of the shaft (8) and intended for abutment against the fingers of a user, and the second operating element (12) is arranged on the outer side (28).

16. Handle according to one of Claims 1 to 15,
**characterized in that** the handle (6) has a third operating element (13), wherein the third operating element (13) is arranged on the inner side (29), wherein the third operating element (13) has an actuation position (40), in which the third operating element (13), during a movement from a non-actuated position (39) to its actuated position (41), starts to perform an actuation stroke (67), and wherein, in the actuation position (40), the third operating element (13), in a viewing direction of the fastening end (9) in the direction of the longitudinal axis (14), projects at most 1 mm beyond the outer contour of the handle (6, 7), in particular is situated behind the outer contour of the handle (6, 7).

17. Handle according to Claim 16,
**characterized in that**, in the non-actuated position, the third operating element (13) projects beyond the contour of the shaft (8) at at least one side, in particular at its side that is directed towards the fastening end (9).

18. Handle according to one of Claims 1 to 17,
**characterized in that** the shaft (8) of the handle (6) has a grip portion (45) with an elongate, roughly cylindrical shape, and **in that** a thickened portion (46) adjoins the grip portion (45) in the direction of the fastening end (9).

19. Brushcutter having a guide tube (2), wherein a tool unit (3) is arranged on one end (42) of the guide tube (2), wherein a handle bar (43) carrying on each end a handle (6, 7) according to one of Claims 1 to 18 is fixed on the guide tube (2), wherein each handle (6, 7) is fixed on the handle bar (43) at the fastening end (9) of the shaft (8), wherein each handle (6, 7) has a front side (27), which is directed towards the tool unit (3), and an oppositely situated rear side (30), wherein the inner sides (29) of the handles (6, 7) are directed towards one another, and wherein the outer sides (28) of the handles (6, 7) are directed away from one another.

## Revendications

1. Poignée (6, 7) destinée à un outil à main, la poignée (6, 7) comportant une tige (8) qui est pourvue d'une extrémité de fixation (9), à laquelle la poignée (6, 7) est fixée, et d'une extrémité libre (10), la poignée (6, 7) comportant un côté extérieur (28) qui est au moins partiellement prévu pour venir en appui sur une paume (52) d'un utilisateur (51), la poignée (6, 7) comportant un côté intérieur (29) opposé au côté extérieur (28), la poignée (6, 7) présentant un axe longitudinal (14), la tige (8) formant avec son extrémité libre (10) une surface d'appui (15) destinée à la main d'un utilisateur,
**caractérisée en ce qu'**une surface d'appui de pouce (20) est disposée sur le côté intérieur (29) de la poignée (6, 7), laquelle surface, dans une vue latérale perpendiculaire au côté intérieur (29), forme en tout point un angle (β) d'au moins 20° et d'au plus 70° avec l'axe longitudinal (14).

2. Poignée selon la revendication 1,
**caractérisée en ce que** la surface d'appui de pouce (20) est située entre deux plans (34, 35) parallèles entre eux dont la distance (h) est inférieure à 3 mm, et **en ce que** la surface d'appui de pouce (20) a une longueur (f) d'au moins 2,5 cm et une largeur (g) d'au moins 8 mm.

3. Poignée selon la revendication 1 ou 2,
**caractérisée en ce que** la surface d'appui de pouce (20) est à une distance (i) d'au moins 1 cm de l'extrémité libre (10) de la tige (8).

4. Poignée selon l'une des revendications 1 à 3,
**caractérisée en ce que** la surface d'appui de pouce (20) se transforme en le côté intérieur (29) de la poignée (6, 7) avec une courbure concave (31).

5. Poignée selon l'une des revendications 1 à 4,
**caractérisée en ce que** la surface d'appui de pouce (20) forme avec l'axe longitudinal (14), dans un plan de coupe parallèle à l'axe longitudinal (14) et passant par le côté intérieur (29), un angle ( ) qui s'ouvre vers l'extrémité de fixation (9) et qui est de 30° à 110°, notamment de 45° à 90°.

6. Poignée selon l'une des revendications 1 à 5,
**caractérisée en ce que** la surface d'appui (15) se transforme par une courbe continue (32) en un côté arrière (30) qui s'étend dans la direction circonférentielle de la tige (8) entre le côté intérieur (29) et le côté extérieur (28).

7. Poignée selon la revendication 6,
**caractérisée en ce que** la courbe (32) a un rayon (r) d'au moins 1,5 cm, en particulier d'au moins 2 cm, en chaque point dans une vue latérale du côté extérieur (28).

8. Poignée selon l'une des revendications 1 à 7,
**caractérisée en ce que**, sur la tige (8), un premier élément de commande (11) est monté de manière pivotante sur un premier axe de pivotement (21) et un deuxième élément de commande (12) est monté de manière pivotante sur un deuxième axe de pivotement (22), le premier élément de commande (11) étant conçu pour commander le moteur d'entraînement (26) et le deuxième élément de commande (12) empêchant la commande du moteur d'entraînement (26) par le biais du premier élément de commande (11) dans la position non actionnée.

9. Poignée selon la revendication 8,
**caractérisée en ce que** l'axe longitudinal (14) est orienté perpendiculairement au premier axe de pivotement (21) et perpendiculairement au deuxième axe de pivotement (22) et **en ce que**, dans la direction d'observation suivant l'axe longitudinal (14), le premier axe de pivotement (21) et le deuxième axe de pivotement (22) forment un angle (α) inférieur à 180°, en particulier inférieur à 120°, de préférence d'environ 90°.

10. Poignée selon la revendication 8 ou 9,
**caractérisée en ce que** le deuxième élément de commande (12) comporte dans la position non actionnée une portion d'actionnement (16) qui fait saillie de la tige (8) et qui est pourvue d'une première extrémité (17) plus proche de l'extrémité de fixation (9) et d'une deuxième extrémité (18) plus proche de l'extrémité libre (10) de la tige (8) et **en ce que** le deuxième axe de pivotement (22) est disposé plus près de la première extrémité (17) de la portion d'actionnement (16) que de la deuxième extrémité (18).

11. Poignée selon la revendication 10,
**caractérisée en ce que**, dans la position d'actionnement du deuxième élément de commande (12), la portion d'actionnement (16) du deuxième élément de commande (12) ne dépasse en aucun point du contour extérieur de la tige (8) de plus de 3 mm.

12. Poignée selon l'une des revendications 8 à 11,
**caractérisée en ce que** le premier élément de commande (11) dans la position non actionnée comporte une portion d'actionnement (23) qui fait saillie de la tige (8) et qui comporte une première extrémité (24) plus proche de l'extrémité de fixation (9) et une deuxième extrémité (25) plus proche de l'extrémité libre (10) de la tige (8) et **en ce que** le premier axe de pivotement (21) est disposé plus près de la deuxième extrémité (25) de la portion d'actionnement (23) que de la première extrémité (24).

13. Poignée selon l'une des revendications 8 à 12,
**caractérisée en ce que** la portion d'actionnement (16, 23) d'au moins un élément de commande (11, 12) est à une distance (d, e) inférieure à 7 cm de l'extrémité libre (10) de la tige (8).

14. Poignée selon l'une des revendications 8 à 13,
**caractérisée en ce que** la portion d'actionnement (16) du premier élément de commande (11) et la portion d'actionnement (23) du deuxième élément de commande (12) se chevauchent sur une portion de longueur (19) de la tige (8), dont la longueur (a) mesurée dans la direction de l'axe longitudinal (14) représente au moins 30 %, en particulier au moins 50 %, de la longueur (b), mesurée dans la même direction, de la portion d'actionnement (23) du premier élément de commande (11).

15. Poignée selon l'une des revendications 8 à 14,
**caractérisée en ce que** le premier élément de commande (11) est disposé sur un côté avant (27) qui s'étend dans la direction circonférentielle de la tige (8) entre le côté intérieur (29) et le côté extérieur (28) et qui est prévu pour venir en appui sur les doigts d'un utilisateur, et le deuxième élément de commande (12) est disposé sur le côté extérieur (28).

16. Poignée selon l'une des revendications 1 à 15,
**caractérisée en ce que** la poignée (6) comporte un troisième élément de commande (13), le troisième élément de commande (13) étant disposé sur le côté intérieur (29), le troisième élément de commande (13) présentant une position d'actionnement (40) dans laquelle le troisième élément de commande (13) commence à effectuer une course d'actionnement (67) lors d'un mouvement d'une position non actionnée (39) à sa position actionnée (41) et le troisième élément de commande (13), dans la position d'actionnement (40), faisant saillie du contour extérieur de la poignée (6, 7) d'au plus 1 mm, en particulier étant situé en arrière du contour extérieur de la poignée (6, 7), dans la direction d'observation de l'axe longitudinal (14) à l'extrémité de fixation (9).

17. Poignée selon la revendication 16,
**caractérisée en ce que** le troisième élément de commande (13) fait saillie du contour de la tige (8) en position non actionnée sur au moins un côté, en particulier sur son côté dirigé vers l'extrémité de fixation (9).

18. Poignée selon l'une des revendications 1 à 17,
**caractérisée en ce que** la tige (8) de la poignée (6) comporte une portion de poignée (45) qui présente une forme allongée, à peu près cylindrique, et **en ce que**, en direction de l'extrémité de fixation (9), une portion épaissie (46) se raccorde à la portion de poignée (45).

19. Débroussailleuse comprenant un tube de guidage (2), une unité d'outil (3) étant disposée à une extrémité (42) du tube de guidage (2), une barre de guidage (43), qui porte à chaque extrémité une poignée (6, 7) selon l'une des revendications 1 à 18, étant fixée au tube de guidage (2), chaque poignée (6, 7) étant fixée à la barre de guidage (43) à l'extrémité de fixation (9) de la tige (8), chaque poignée (6, 7) comportant un côté avant (27) dirigé vers l'unité d'outil (3) et un côté arrière opposé (30), les côtés intérieurs (29) des poignées (6, 7) étant dirigés l'un en face de l'autre et les côtés extérieurs (28) des poignées (6, 7) étant opposés l'un à l'autre.
